# EUROPEAN PATENT SPECIFICATION

(11) **EP 3 355 650 B1**
(45) Date of publication and mention of the grant of the patent: **05.02.2020**
(21) Application number: 15906526.7
(22) Date of filing: 23.10.2015
(51) Int. Cl.: H04W 4/20, H04W 76/10

(54) **METHOD AND DEVICES FOR INFORMATION INTERACTION**
VERFAHREN UND VORRICHTUNGEN ZUR INFORMATIONSINTERAKTION
PROCÉDÉ ET DISPOSITIFS D'INTERACTION D'INFORMATIONS

(43) Date of publication of application: 01.08.2018
(73) Proprietor: Huawei Technologies Co., Ltd., Longgang District Shenzhen, Guangdong 518129 (CN)
(72) Inventor: LIU, Huiping, Shenzhen Guangdong 518129 (CN); HUANG, Min, Shenzhen Guangdong 518129 (CN); PANG, Lingli, Shenzhen Guangdong 518129 (CN); ZHENG, Xiaoxiao, Shenzhen Guangdong 518129 (CN); BI, Hao, Shenzhen Guangdong 518129 (CN)
(74) Representative: Goddar, Heinz J.
(86) International application number: PCT/CN2015/092778
(87) International publication number: WO 2017/067009

(56) References cited:
- EP-A1- 2 770 800
- WO-A1-2014/160926
- WO-A1-2015/046851
- CN-A- 102 858 028
- CN-A- 103 037 448
- CN-A- 103 188 822
- US-A1- 2012 155 398
- US-A1- 2013 272 181

## Description

### TECHNICAL FIELD

The present disclosure relates to the field of communications technologies, and in particular, to an information exchange method and devices.

### BACKGROUND

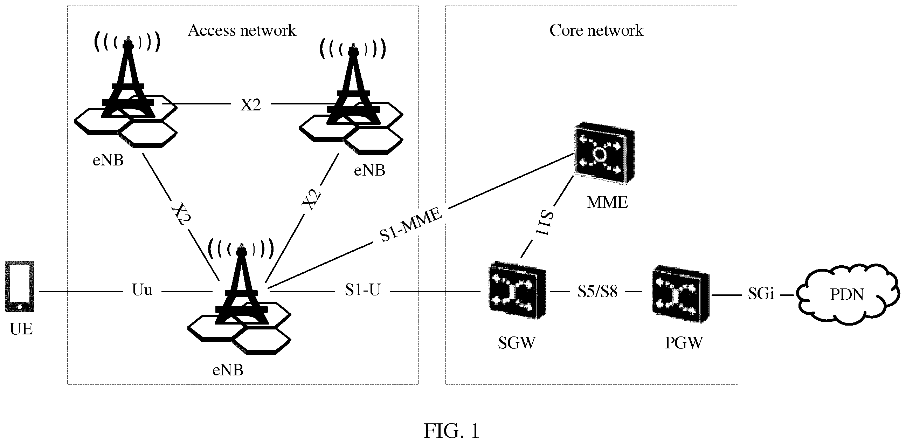

Currently, a network, in particular, an access network is a key to ensuring user experience. As shown in FIG. 1, user equipment (UE) accesses a PDN network by using an access network (including multiple evolved NodeBs (eNB) via a core network (including a mobility management entity (MME), a serving gateway (SGW), and a packet data network gateway (PGW).

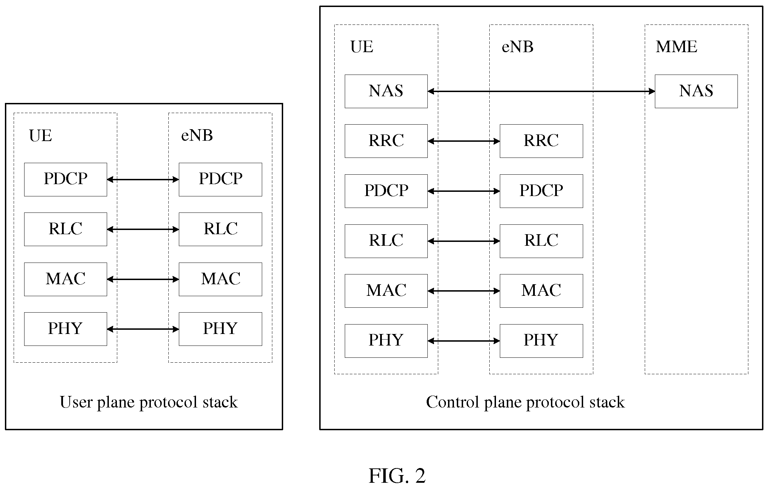

As shown in FIG. 2, in the prior art, a user plane protocol stack between UE and an eNB is parsed at most to a packet data convergence protocol (PDCP) layer, and a control plane protocol stack is parsed at most to a radio resource control (RRC) layer. Therefore, information exchange of a related service between an application layer of the UE and a network cannot be implemented by using the existing user plane protocol stack and the control plane protocol stack. On one hand, the network cannot optimize resource configuration and usage according to a service feature, and therefore proper resource configuration and usage cannot be ensured, and resource utilization is further reduced. For example, the network cannot obtain information such as a video bit rate, video duration, and an initial buffer time of a video application on a UE side, and the network cannot perform resource optimization and configuration on the video application according to the information either. On the other hand, the UE side cannot perceive a status of the network, and the UE side cannot perform corresponding service adjustment according to the status of the network either. Therefore, user experience is reduced.

Therefore, how to implement exchange between the network and the application layer of the UE becomes an urgent problem to be resolved currently.

EP 2 770 800 A1 discloses a base station. The base station establishes a wireless network bearer channel with a UE, receives a service request of the UE through the wireless network bearer channel, parses a request content in the service request, generates a cloud service access request according to a content, sends the cloud service access request to the cloud server end, and returns a corresponding processing result of the cloud server end to the UE through the wireless network bearer channel.

US 2013/272181 A1 discloses a method for a user equipment to generate, for transmission to a remote entity executing on a remote computing device in communication with the UE over an air interface of an EUTRAN, a container that includes UE or base station configuration data, or over-the-top application configuration data.

Document US2012/155398 A1 refers to enhancing quality of experience in a wireless multimedia communication system. A signalling mechanism is provided to make application-layer parameters of a multimedia application to be accessible in one or more network interfaces. CN 103 188 822 A relates to a machine communication method comprising acquiring trigger information, wherein identification information of a target network device is carried in the trigger information, analysing the trigger information, and establishing communication connection between a local target communication layer and the target communication layer of the target network device.

### SUMMARY

The present disclosure provides an information exchange method of claim 1, user equipment of claim 3 and a network device of claim 7, to resolve a prior-art problem that exchange between a network and an application layer of UE cannot be implemented. Possible implementation manners are disclosed in the dependent claims.

According to a first aspect, an information exchange method is provided, including:
establishing, by user equipment (UE) with a first network device, a radio bearer for exchanging first information;
sending, by the UE, the first information to the first network device by using the radio bearer; where
the UE includes a radio access network application control (RAC) layer, the RAC layer of the UE is located at a framework layer of the UE or an application layer of the UE; the method further comprises: collecting, by the RAC layer of the UE, the first information, and transmitting, by the RAC layer of the UE, the first information to a bottom layer of the UE;
wherein the sending the first information to the first network device by using the radio bearer comprises: sending, by the bottom layer of the UE, the first information to a bottom layer of the first network device; wherein the bottom layer of the UE and the bottom layer of the first network device include a packet data convergence protocol, PDCP, layer, a radio link control, RLC, layer, a medium access control, MAC, layer and a physical, PHY, layer; and
the first information is information about the application layer of the UE and the first information includes at least one of the following information: service information of the UE, sensor information of the UE, user behavior information, and status information of the UE;wherein the establishing, by the UE with the first network device, the radio bearer for exchanging the first information includes:
sending, by the UE, a first request message to a second network device, so that the second network device establishes, according to the first request message, the radio bearer for exchanging the first information between the UE and the first network device, where the first request message includes first indication information, and the first indication information is used to instruct to establish the radio bearer for exchanging the first information between the UE and the first network device;
receiving, by the UE, a first bearer establishment message sent by the first network device, where the first bearer establishment message includes a first configuration message and a second configuration message, the first configuration message includes at least one of an IP address of the UE, a port number of a higher layer service of the UE, an IP address of the first network device, and a port number of the first network device, and the second configuration message includes a radio bearer identity (ID) assigned by the first network device to the UE;
determining, by the UE, a mapping relationship between the radio bearer and the first information according to the first configuration message and the second configuration message; and
sending, by the UE, a first bearer establishment complete message to the first network device.

According to a second aspect, user equipment (UE) is provided, including: a processing unit and a sending unit, where
the processing unit is configured to establish a radio bearer for exchanging first information between the UE and a first network device;
the sending unit is configured to send the first information to the first network device by using the radio bearer; and
the UE includes a radio access network application control (RAC) layer, the RAC layer of the UE is located at a framework layer of the UE or an application layer of the UE;
the RAC layer of the UE is configured to collect the first information and transmit the first information to a bottom layer of the UE; wherein the first information is sent by using the bottom layer of the UE to a bottom layer of the first network device; wherein the bottom layer of the UE and the bottom layer of the first network device include a packet data convergence protocol, PDCP, layer, a radio link control, RLC, layer, a medium access control, MAC, layer and a physical, PHY, layer;
the first information is information about the application layer of the UE and the first information includes at least one of the following information: service information of the UE, sensor information of the UE, user behavior information, and status information of the UE;
wherein the processing unit is further configured to: send a first request message to a second network device, so that the second network device establishes, according to the first request message, the radio bearer for exchanging the first information between the UE and the first network device, where the first request message includes first indication information, and the first indication information is used to instruct to establish the radio bearer for exchanging the first information between the UE and the first network device; receive a first bearer establishment message sent by the first network device, where the first bearer establishment message includes a first configuration message and a second configuration message, the first configuration message includes at least one of an IP address of the UE, a port number of a higher layer service of the UE, an IP address of the first network device, and a port number of the first network device, and the second configuration message includes a radio bearer identity (ID) assigned by the first network device to the UE; determine a mapping relationship between the radio bearer and the first information according to the first configuration message and the second configuration message; and send a first bearer establishment complete message to the first network device.

According to a third aspect, a first network device is provided, where the first network device includes a radio access network application control (RAC) layer, and the first network device further includes: a processing unit and a receiving unit;
the processing unit is configured to establish a radio bearer for exchanging first information between the first network device and user equipment (UE); and
the receiving unit is configured to receive, by using the RAC layer, the first information sent by the UE by using the radio bearer; where
the first information is sent from a bottom layer of the UE to a bottom layer of the first network device, and a transmission control protocol/internet protocol ,TCP/IP, layer or a user datagram protocol/internet protocol, UDP/IP, layer of the first network device is configured to: after the first information reaches the bottom layer of the first network device, transfer the first information to the RAC layer of the first network device; wherein the bottom layer of the UE and the bottom layer of the first network device include a packet data convergence protocol, PDCP, layer, a radio link control, RLC, layer, a medium access control, MAC, layer and a physical, PHY, layer; and
the first information is information about an application layer of the UE and the first information includes at least one of the following information: service information of the UE, sensor information of the UE, user behavior information, and status information of the UE;
the processing unit is further configured to: receive a setting request message sent by a second network device, where the setting request message includes a first configuration message, and the first configuration message includes at least one of an IP address of the UE, a port number of a higher layer service of the UE, an IP address of the first network device, and a port number of the first network device; send a first bearer establishment message to the UE, where the first bearer establishment message includes the first configuration message and a second configuration message, and the second configuration message includes a radio bearer identity (ID) assigned by the first network device to the UE; and receive a first bearer establishment complete message sent by the UE.

### BRIEF DESCRIPTION OF DRAWINGS

To describe the technical solutions in the embodiments of the present disclosure more clearly, the following briefly describes the accompanying drawings required for describing the embodiments.
FIG. 1 is a schematic flowchart of data exchange between UE and a network in an existing mobile communications network;
FIG. 2 is a schematic composition diagram of a user plane protocol stack and a control plane protocol stack in an existing mobile communications network;
FIG. 3 is a schematic architecture diagram of a mobile communications system according to an embodiment of the present disclosure;
FIG. 4 is a schematic diagram of a hierarchical architecture of UE according to an embodiment of the present disclosure;
FIG. 5 is a schematic diagram of a hierarchical architecture of a first network device according to an embodiment of the present disclosure;
FIG. 6 is a schematic diagram 1 of a trend of information transmission between UE and a first network device in an information exchange method according to an embodiment of the present disclosure;
FIG. 7 is a schematic exchange diagram 1 of an information exchange method according to an embodiment of the present disclosure;
FIG. 8A and FIG. 8B are a schematic exchange diagram 2 of an information exchange method according to an embodiment of the present disclosure;
FIG. 9A and FIG. 9B are a schematic exchange diagram 3 of an information exchange method according to an embodiment of the present disclosure;
FIG. 10A and FIG. 10B are a schematic exchange diagram 4 of an information exchange method according to an example;
FIG. 11A and FIG. 11B are a schematic exchange diagram 5 of an information exchange method;
FIG. 12 is a schematic exchange diagram 6 of an information exchange method according to an example;
FIG. 13 is a schematic exchange diagram 7 of an information exchange method;
FIG. 14A and FIG. 14B are a schematic exchange diagram 8 of an information exchange method;
FIG. 15 is a schematic diagram of a hierarchical architecture of another UE according to an example;
FIG. 16 is a schematic diagram 2 of a trend of information transmission between UE and a first network device in an information exchange method according to an embodiment of the present disclosure;
FIG. 17 is a schematic exchange diagram 9 of an information exchange method according to an example;
FIG. 18 is a schematic structural diagram 1 of UE according to an embodiment of the present disclosure;
FIG. 19 is a schematic structural diagram 2 of UE according to an embodiment of the present disclosure;
FIG. 20 is a schematic structural diagram 3 of UE according to an embodiment of the present disclosure;
FIG. 21 is a schematic structural diagram 1 of a first network device according to an embodiment of the present disclosure;
FIG. 22 is a schematic structural diagram 2 of a first network device according to an embodiment of the present disclosure;
FIG. 23 is a schematic structural diagram of an information exchange apparatus according to an example; and
FIG. 24 is a schematic structural diagram of an information exchange system according to an embodiment of the present disclosure.

### DESCRIPTION OF EMBODIMENTS

The following clearly describes the technical solutions in the embodiments of the present disclosure with reference to the accompanying drawings in the embodiments of the present disclosure.

To facilitate clear description of the technical solutions in the embodiments of the present disclosure, words such as "first" and "second" are used in the embodiments of the present disclosure to distinguish between the same items or similar items that provide basically the same functions or purposes. A person skilled in the art may understand that the words such as "first" and "second" do not restrict the number and the implementation order.

The present disclosure is mainly applied to a mobile communications system, and the mobile communications system may be a universal mobile telecommunications system (UMTS), or may be long term evolution (LTE) system, or an LTE-Advanced (LTE-A) system, or an another future version of a continuous evolved communications system or another mobile communications system. This is not specifically limited in the embodiments of the present disclosure.

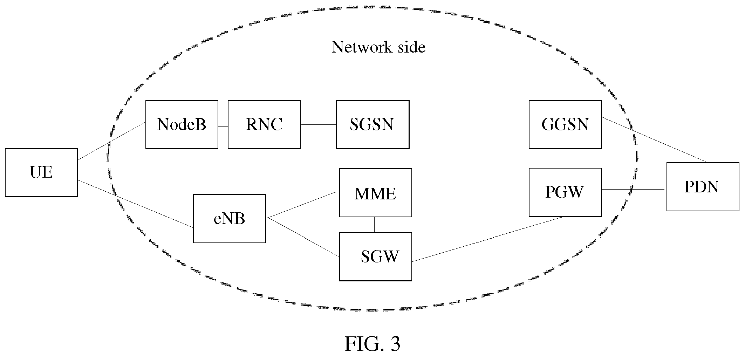

As shown in FIG. 3, for UMTS, UE accesses a packet data network (PDN) by using a NodeB via a radio network controller (RNC), a serving general packet radio service (GPRS) support node (SGSN), a gateway GPRS support node (GGSN). For the LTE system, UE accesses a PDN network by using an eNB via an MME, an SGW, and a PGW.

A first network device in the embodiments is an access network device (for example, a NodeB or an RNC in UMTS or an eNB in the LTE system) in the mobile communications system, a second network device is a core network device in the mobile communications system (for example, an SGSN in UMTS or an MME in the LTE system), and a third network device is a core network device in the mobile communications system (for example, a GGSN in UMTS or a PGW in the LTE system).

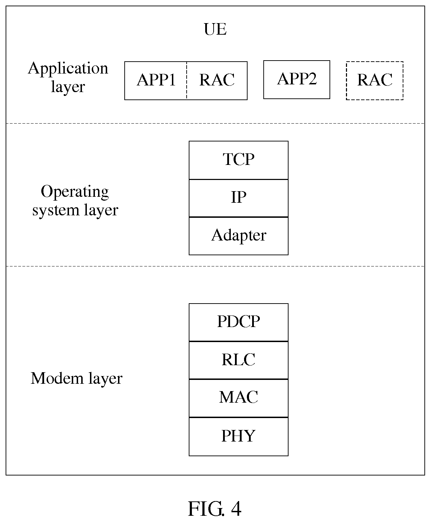

FIG. 4 is a schematic diagram of a hierarchical architecture of UE according to an embodiment of the present disclosure, including an application layer, a platform layer, and a modem layer (or referred to as a bottom layer). As shown in FIG. 4, the UE further includes a radio access network application control (RAC) layer, the RAC layer is mainly used to obtain and transfer first information on a UE side, and further, the RAC layer may be used to parse received second information. The RAC layer may be located at the application layer. For example, the RAC layer may be located in an existing APP module of the application layer, or may be located in an independent module of the application layer. Certainly, the RAC layer may be located at the platform layer or the application layer. This is not specifically limited in this embodiment of the present disclosure.

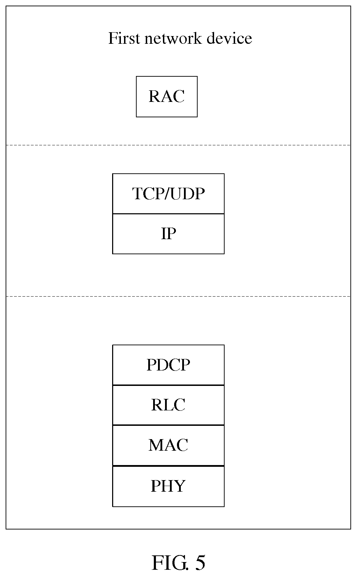

FIG. 5 is a schematic diagram of a hierarchical architecture of a first network device according to an embodiment of the present disclosure. As shown in FIG. 5, the first network device includes an RAC layer, a transmission control protocol (TCP)/internet protocol (IP) layer, or a user datagram protocol (UDP)/IP layer. The RAC layer mainly receives first information, and further, the RAC layer may be further used to: analyze and process the first information, and produce and transfer second information.

In addition, it should be noted that in a continuous evolved communications system with future another version or another mobile communications system, a name of the RAC layer may change, and shall fall within the protection scope of the embodiments of the present disclosure provided that a unit or a module of the RAC layer in this embodiment of the present disclosure is included, and description is centrally made herein.

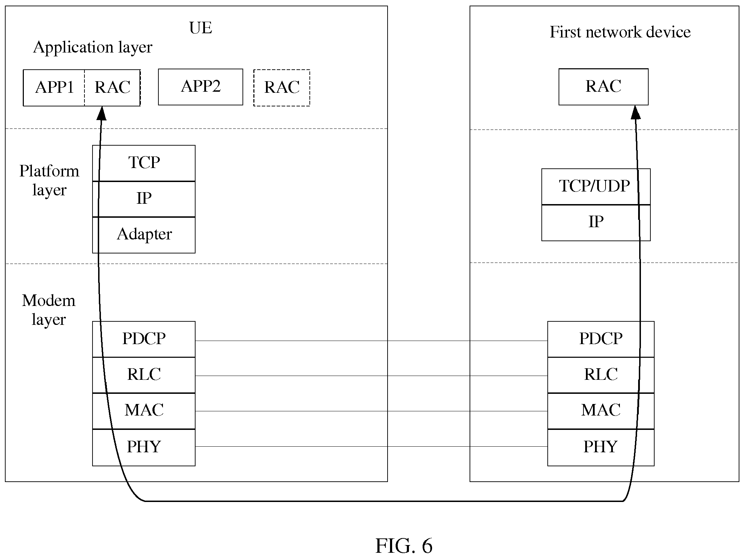

With reference to FIG. 4 and FIG. 5, as shown in FIG. 6, FIG. 6 shows a schematic diagram of a trend of information transmission between UE and a first network device in an information exchange method according to an embodiment of the present disclosure. It can be learned from FIG. 6 that in this embodiment of the present disclosure, inside the UE, an RAC layer collects information about an application layer (that is, first information), and transmits the information to a bottom layer of the UE, and then, the bottom layer of the UE sends the first information to a bottom layer of the first network device; after the first information reaches the bottom layer of the first network device, a TCP/IP layer (or a UDP/IP layer) of the first network device further transfers the first information to an RAC layer of the first network device, and the RAC layer of the first network device analyzes and processes the information to generate corresponding second information, and then sends the second information to the RAC layer of the UE, so that the RAC layer of the UE performs corresponding optimization configuration according to the second information.

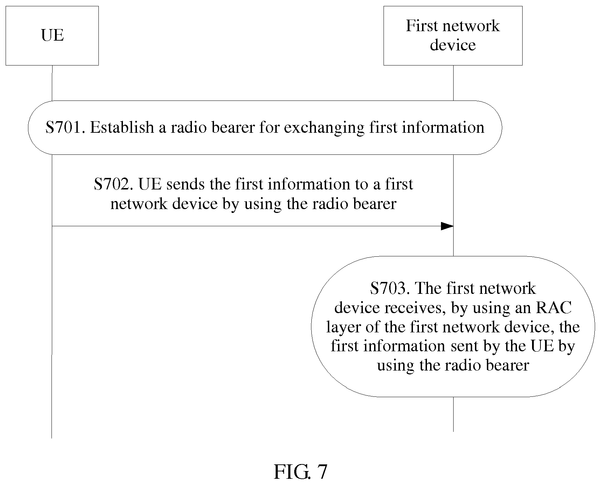

Based on the foregoing description, an embodiment of the present disclosure provides an information exchange method. As shown in FIG. 7, the method includes the following steps.
S701. UE and a first network device establish a radio bearer for exchanging first information.
S702. The UE sends the first information to the first network device by using the radio bearer.
S703. The first network device receives, by using an RAC layer of the first network device, the first information sent by the UE by using the radio bearer.

The first information is information sent by an RAC layer of the UE to a bottom layer of the UE, and the first information includes at least one of the following information: at least one piece of service information of the UE, at least one piece of sensor information collected by the UE, at least one piece of user behavior information collected by the UE, and at least one piece of UE status information collected by the UE.

In addition, it should be noted that "the first network device" in this embodiment of the present disclosure may be any network device described in the foregoing embodiments, "first" is merely for distinguishing between "second" in the following "second network device", and description is centrally made herein.

For example, the service information of the UE includes at least one of the following information: service identity information, request indication class information, service cache information, to-be-received data information, service status information, local routing information, TCP proxy information, and data routing information.

The service identity information is used to indicate an over the top (OTT) to which a service belongs, or a service provider, and/or a service name or a service identifier, or the like. The service identity information may include at least one of the following information: service provider information, a service type, a name of an application providing the service, a service name, and a server address corresponding to the service (for example, an IP address and/or a TCP port number).

A video service is used as an example, and a service provider may include different application names such as Sohu Video and Tencent Video, and service provider information or an address (a port number). The service type may include names such as a video service and a game that specifically represent a service feature, and the video service may further be classified into a live service, an on-demand service, and the like. The service name may be a name or an internal serial number of a service, for example, channel information or program information in a video service, for example, a TV series: The Journey of Flower.

It should be noted that the service in this embodiment of the present disclosure may be one service substream of one specific application, or one piece of fragment data corresponding to one application. This is not specifically limited in this embodiment of the present disclosure. The first information in this embodiment of the present disclosure may be one piece of first information respectively corresponding to each service of the UE, or may be one piece of first information corresponding to multiple services that are performed or to be performed by the UE. This is not specifically limited in this embodiment of the present disclosure.

The request indication class information is used to indicate whether a service request initiated by the user is initiating a service for the first time or is in a buffer wait phase. For example, a video service is used as an example, and the information is used to indicate whether the UE is in a video playing wait phase, and is mainly used for user waiting caused by first-time video playing and video dragging.

The service cache information is used to indicate a service cache size when the first information is reported, and/or whether a dynamic adaptive streaming over hypertext transfer protocol (DASH) is supported. The service cache information may include at least one of the following information: a total cache size, a size of data in a cache at the time of request sending, an unoccupied-cache size at the time of request sending, a bit rate corresponding to the data in the cache, and a fast scheduling indication for a request data packet.

For example, the cache may be a cache of an application layer (for example, a memory size occupied by a played service or an application), or may be a TCP cache. This is not specifically limited in this embodiment of the present disclosure. The size of the data in the cache may be a time that the data in the cache is emptied. The video service is used as an example, and the information may be a time that the data in the cache can be played.

The fast scheduling indication for a request data packet is used to instruct the network to fast schedule downlink data, and is usually used in a scenario in which a current cache meets a condition.

The to-be-received data information is used to indicate information about data that the UE waits to receive, and may include at least one of the following information: a size of a to-be-received data packet, a delay of the to-be-received data, and an identifier of the to-be-received data packet. The identifier of the to-be-received data packet is used to determine data that a cache of the UE is waiting to receive. For example, the identifier of the to-be-received data packet may be an IP 5-tuple corresponding to the data packet, that is, an IP address, a source port, a destination IP address, a destination port, and a transport layer protocol, or may be an identifier number corresponding to the data packet. The delay of the to-be-received data indicates that the UE needs to receive the to-be-received data within this time period.

The service status information is used to indicate a playing state of a current service. For example, the service status information indicates that the current service is in a playing state, an initial wait state, or a frame freezing wait state, or the like.

The local routing information may include at least one of the following information: information that the UE supports local routing, and information about target UE, or the like.

It should be noted that in this embodiment of the present disclosure, a service that can be used for local routing may be indicated by the local routing information together with the service identity information. The service identity information herein may further include a service carrier identifier or a service type, for example, a server address corresponding to a service. This is not specifically limited in this embodiment of the present disclosure. The service type for local routing is a point-to-point communication service.

The TCP proxy information is used to indicate whether a TCP proxy function is supported, and/or an identifier of a specific service on which a TCP proxy needs to be done, or the like. The TCP proxy information may include information about a TCP proxy supported by the UE.

It should be noted that in this embodiment of the present disclosure, a TCP proxy that can be performed for the service may be indicated by the TCP proxy information together with the service identity information. The service identity information herein may further include a service carrier identifier or a service type, for example, a server address corresponding to a service. This is not specifically limited in this embodiment of the present disclosure.

For example, in this embodiment of the present disclosure, the sensor information of the UE includes at least one of the following information: a moving rate of the UE, a moving track of the UE, and moving direction information of the UE.

For example, in this embodiment of the present disclosure, the user behavior information includes at least one of the following information: service disabling, service suspension, screen locking, and power off.

For example, in this embodiment of the present disclosure, the status information of the UE includes at least one piece of the following information: a battery level of the UE, a screen resolution of the UE, or a screen size of the UE.

It should be noted that in the embodiments of the present disclosure, "at least one" may be any one or a combination of multiple. This is not specifically limited in this embodiment of the present disclosure.

It should be noted that in the embodiments of the present disclosure, the application layer of the UE may be an application of the UE, the first information may be obtained by an application layer in FIG. 3, or may be obtained by a platform layer or a bottom layer, and the application layer of the UE is not limited to a specific application protocol layer.

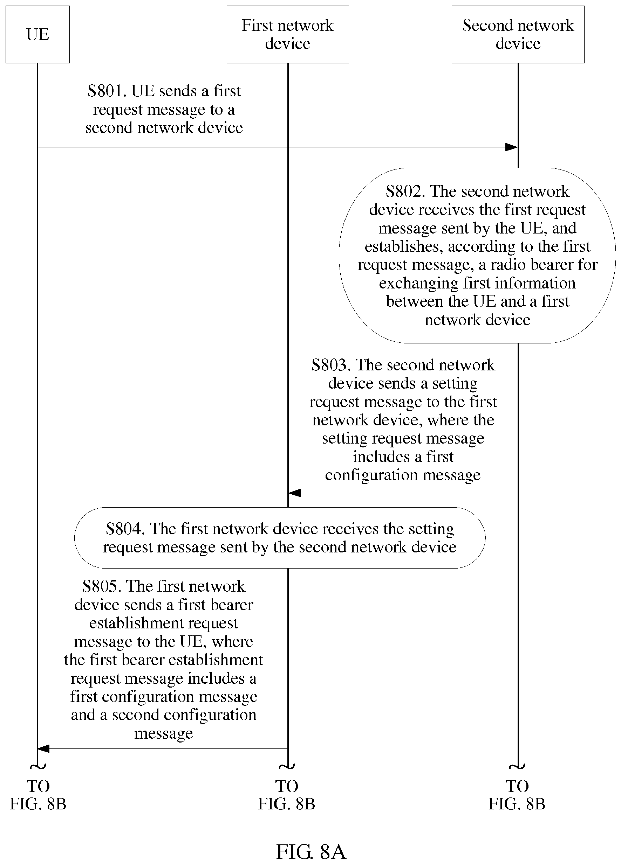

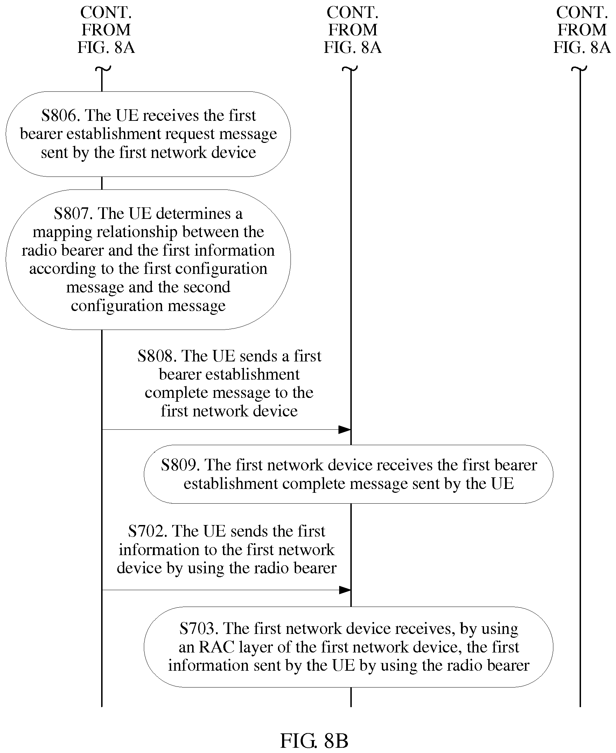

In an implementation of this embodiment of the present disclosure, as shown in FIG. 8A and FIG. 8B, a process of establishing the radio bearer by the UE and the first network device, that is, step S701, includes the following steps.
S801. The UE sends a first request message to a second network device.
S802. The second network device receives the first request message sent by the UE, and establishes, according to the first request message, the radio bearer for exchanging the first information between the UE and the first network device.

The first request message includes first indication information, and the first indication information is used to instruct to establish the radio bearer for exchanging the first information between the UE and the first network device.

S803. The second network device sends a setting request message to the first network device, where the setting request message includes a first configuration message.

The first configuration message includes at least one of an IP address of the UE, a port number of a higher layer service of the UE, an IP address of the first network device, and a port number of the first network device.

The port number is a TCP/UDP port number.

It should be noted that a person skilled in the art may understand that in this embodiment of the present disclosure, a well-known IP address and a well-known TCP/UDP port number may be predefined for the first network device as an IP address and a port number of the first network device. For example, a well-known port number 81 is used as a TCP port number of the first network device. In addition, a core network device (for example, an SGSN in UMTS or a PGW in an LTE system) may assign a corresponding IP address and a corresponding port number to the first network device in a process of creating the radio bearer, and then the core network device transfers the IP address and the port number to the first network device. This is not specifically limited in this embodiment of the present disclosure.
S804. The first network device receives the setting request message sent by the second network device.
S805. The first network device sends a first bearer establishment message to the UE, where the first bearer establishment message includes the first configuration message and a second configuration message.

The second configuration message includes a radio bearer identity (ID) assigned by the first network device to the UE.
S806. The UE receives the first bearer establishment message sent by the first network device.
S807. The UE determines a mapping relationship between the radio bearer and the first information according to the first configuration message and the second configuration message.
S808. The UE sends a first bearer establishment complete message to the first network device.
S809. The first network device receives the first bearer establishment complete message sent by the UE.

That is, the radio bearer for exchanging the first information between the UE and the access network device is completed by the core network device in coordination with the access network device.

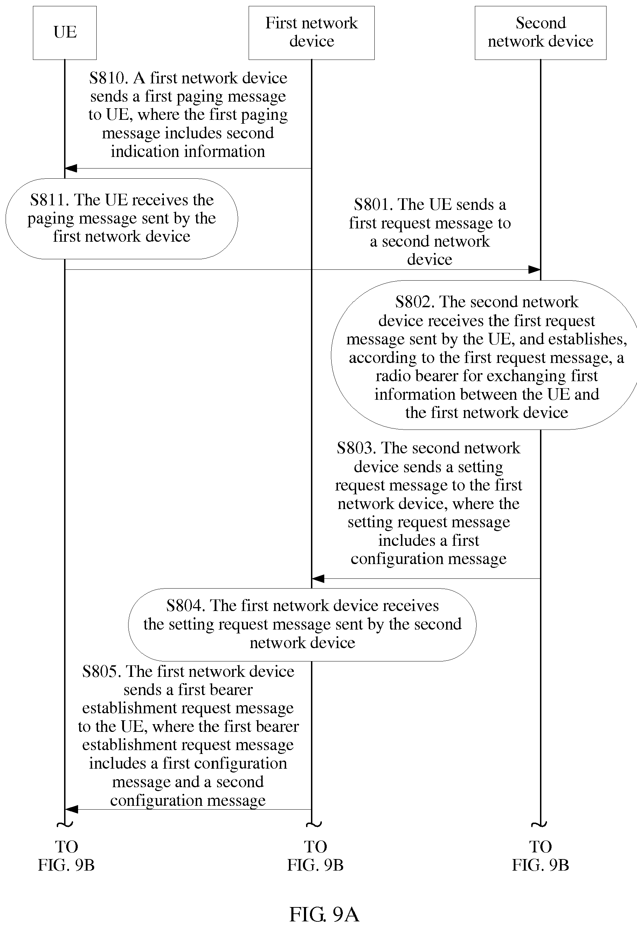

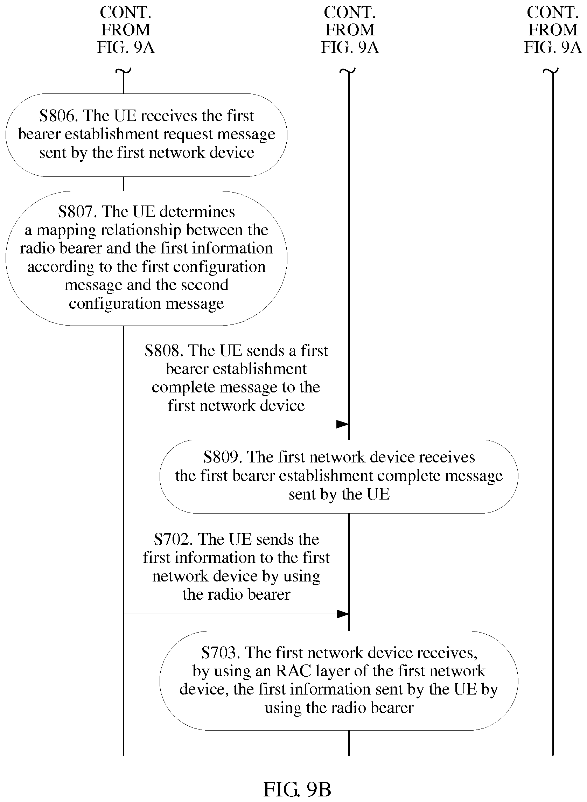

Further, as shown in FIG. 9A and FIG. 9B, the information exchange method provided in this embodiment of the present disclosure may further include the following steps.

S810. The first network device sends a paging message to the UE, where the paging message includes second indication information.

The second indication information is used to instruct to establish the radio bearer for exchanging the first information between the UE and the first network device.

S811. The UE receives the paging message sent by the first network device.

That is, in the information exchange method provided in this embodiment of the present disclosure, when the UE side needs to send the first information to the first network device, the UE may directly send the request message carrying the first indication information to the network device, and then the network device establishes the radio bearer between the UE and the first network device according to the request message; when the first network device side needs to send the information to the UE, the first network device may first send the paging message to the UE, where the paging message carries the second indication information, so that the UE triggers radio bearer establishment according to the second indication information. This is not specifically limited in this embodiment of the present disclosure.

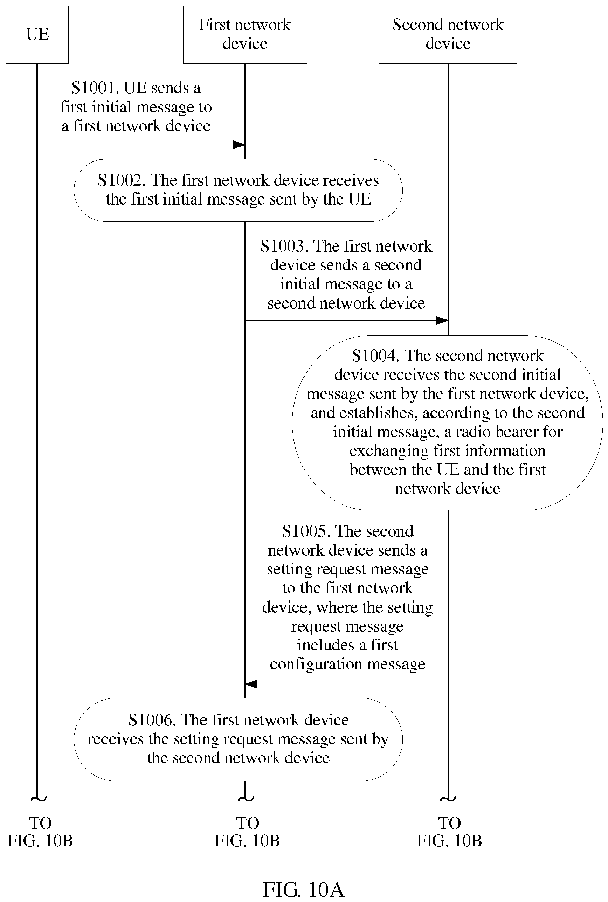

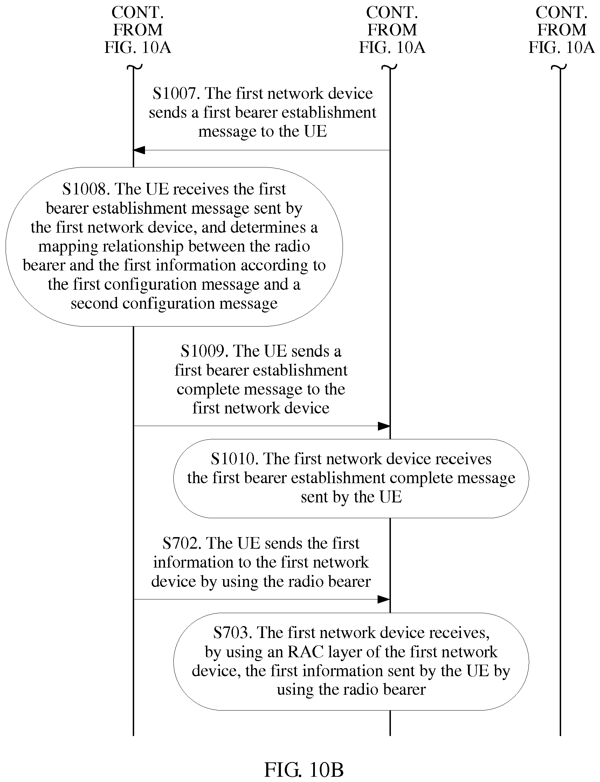

In an example, as shown in FIG. 10A and FIG. 10B, a process of establishing the radio bearer by the UE and the first network device, that is, step S701, may include the following steps.

S1001. The UE sends a first initial message to the first network device.

The first initial message includes first indication information, and the first indication information is used to instruct to establish the radio bearer for exchanging the first information between the UE and the first network device.
S1002. The first network device receives the first initial message sent by the UE.
S1003. The first network device sends a second initial message to a second network device.

The second initial message includes the first indication information, and the first indication information is used to instruct to establish the radio bearer for exchanging the first information between the UE and the first network device.
S1004. The second network device receives the second initial message sent by the first network device, and establishes, according to the second initial message, the radio bearer for exchanging the first information between the UE and the first network device.
S1005. The second network device sends a setting request message to the first network device, where the setting request message includes a first configuration message.

The first configuration message includes at least one of an IP address of the UE, a port number of a higher layer service of the UE, an IP address of the first network device, and a port number of the first network device.
S1006. The first network device receives the setting request message sent by the second network device.
S1007. The first network device sends a first bearer establishment message to the UE.

The first bearer establishment message includes the first configuration message and a second configuration message, and the second configuration message includes a radio bearer ID assigned by the first network device to the UE.
S1008. The UE receives the first bearer establishment message sent by the first network device, and determines a mapping relationship between the radio bearer and the first information according to the first configuration message and the second configuration message.
S1009. The UE sends a first bearer establishment complete message to the first network device.
S1010. The first network device receives the first bearer establishment complete message sent by the UE.

That is, the radio bearer for exchanging the first information between the UE and the access network device is completed by the core network device in coordination with the access network device.

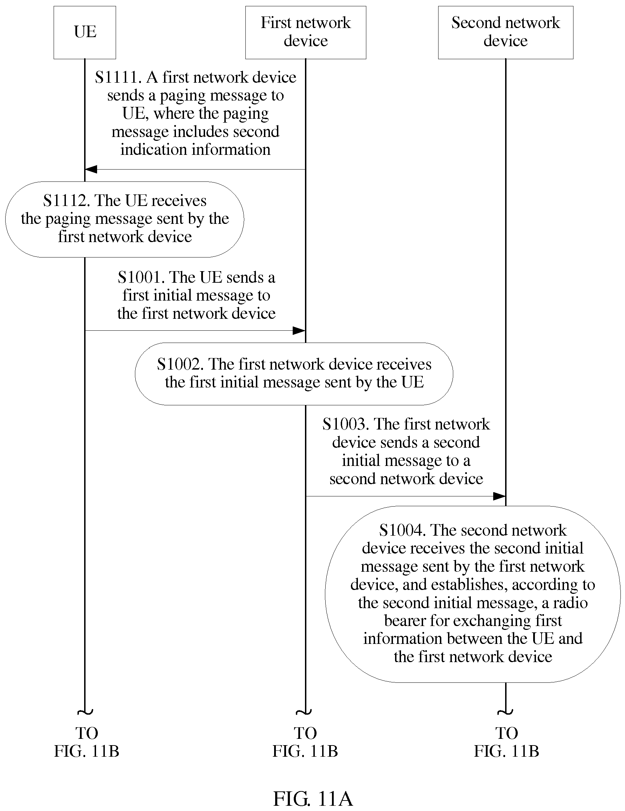

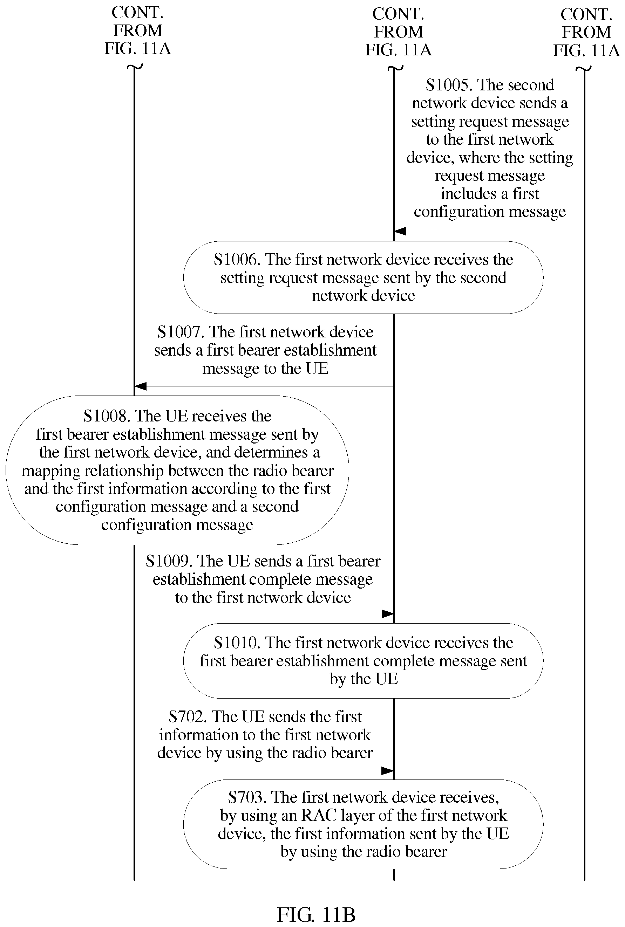

Further, as shown in FIG. 11A and FIG. 11B, the information exchange method of the present disclosure may further include the following steps:

S1111. The first network device sends a paging message to the UE, where the paging message includes second indication information.

The second indication information is used to instruct to establish the radio bearer for exchanging the first information between the UE and the first network device.

S1112. The UE receives the paging message sent by the first network device.

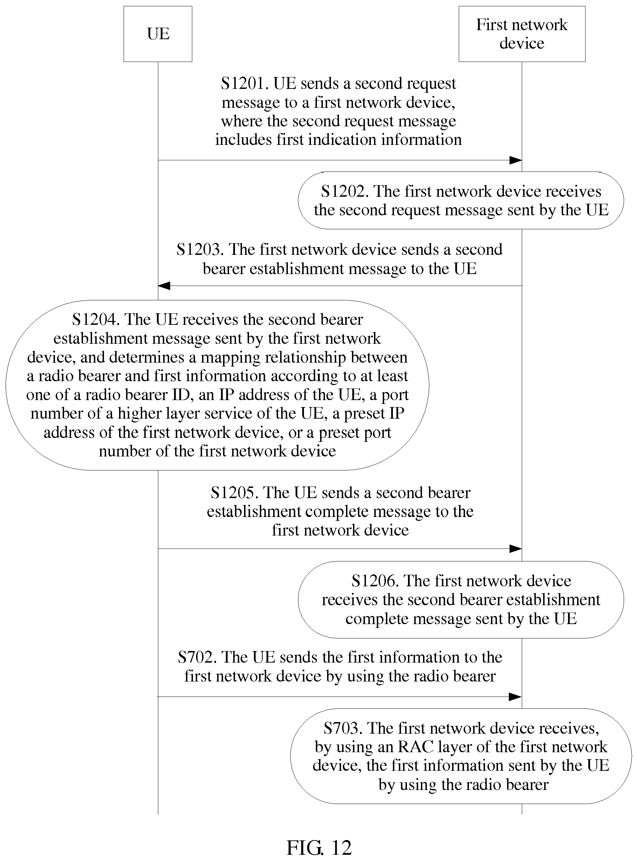

In still another example, as shown in FIG. 12, a process of establishing the radio bearer by the UE and the first network device, that is, step S701, may include the following steps.

S1201. The UE sends a second request message to the first network device, where the second request message includes first indication information.

The first indication information is used to instruct to establish the radio bearer for exchanging the first information between the UE and the first network device.
S1202. The first network device receives the second request message sent by the UE.
S1203. The first network device sends a second bearer establishment message to the UE.

The second bearer establishment message includes at least one of a radio bearer ID assigned by the first network device to the UE, an IP address of the UE, a port number of a higher layer service of the UE, a preset IP address of the first network device, and a preset port number of the first network device.
S1204. The UE receives the second bearer establishment message sent by the first network device, and determines a mapping relationship between the radio bearer and the first information according to at least one of the radio bearer ID, the IP address of the UE, the port number of the higher layer service of the UE, the preset IP address of the first network device, and the preset port number of the first network device.
S1205. The UE sends a second bearer establishment complete message to the first network device.
S1206. The first network device receives the second bearer establishment complete message sent by the UE.

That is, an access network completes the radio bearer for exchanging the first information between the UE and the access network device.

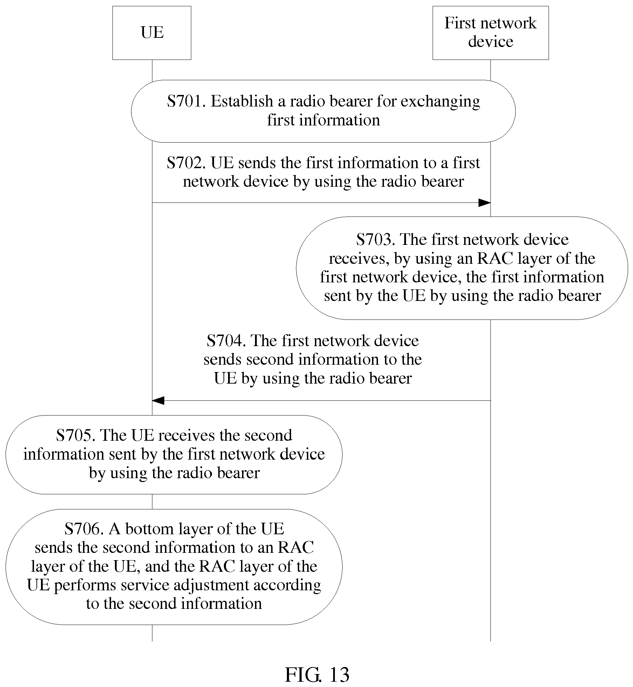

Preferably, as shown in FIG. 13, the information exchange method may further include the following steps.

S704. The first network device sends second information to the UE by using the radio bearer.

The second information includes at least one of the following information: cell load information, cell edge indication information, handover indication information, and bit rate handover indication information.
S705. The UE receives the second information sent by the first network device by using the radio bearer.
S706. A bottom layer of the UE sends the second information to an RAC layer of the UE, and the RAC layer of the UE performs service adjustment according to the second information.

It can be learned that not only the first information can be transmitted from the UE to the first network device, but also the second information can be transmitted from the first network device to the UE. In this way, related applications of the application layer of the UE can perform service adjustment by well using network information, so that user experience is ensured.

For example, a video service is used as an example. In a video playing phase, after the UE reports the first information to the network, the network may determine that the UE is in an initial video wait phase according to the first information, and then the network accelerates scheduling of a downlink data packet of the UE according to the first information, to ensure that the data packet can rapidly reach the UE for playing. This ensures proper resource configuration and usage, reduces a user wait delay, and improves user experience.

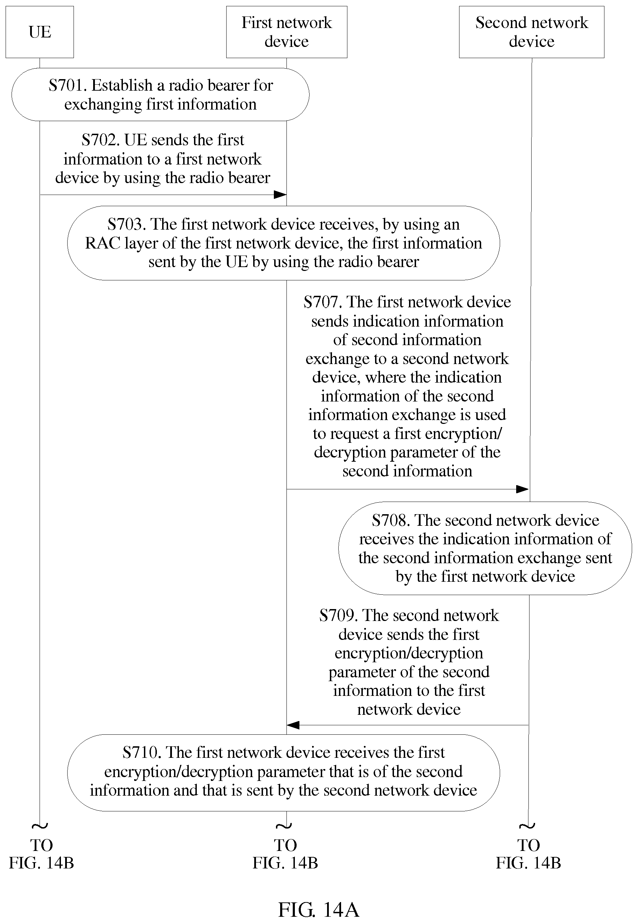

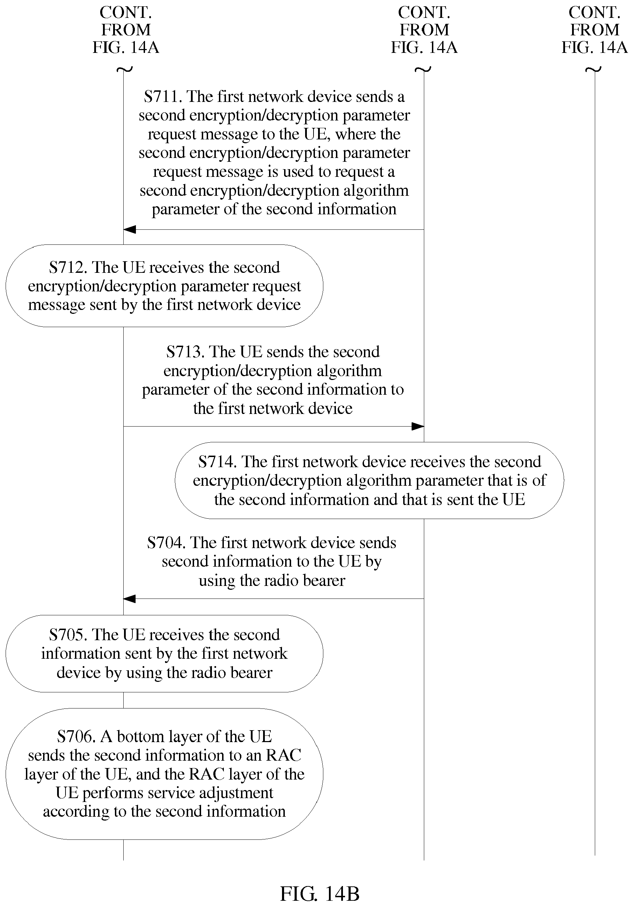

In addition, in consideration that there is no encryption parameter negotiation in the foregoing transmission bearer establishment process, if the UE triggers the foregoing process in an idle state, it is possible that higher layer information cannot be encrypted on an air interface when being transferred, and transferred information may be leaked. Therefore, referring to FIG. 14A and FIG. 14B, the information exchange method may further include: steps S707-S714.

S707. The first network device sends indication information of second information exchange to a second network device, where the indication information of the second information exchange is used to request a first encryption/decryption parameter of the second information.

For example, if the mobile communications system is an LTE system, the first network device is an eNB, the second network device is an MME, and the eNB may send, by using a second initial message the indication information of the second information exchange to the MME, where the first encryption/decryption parameter is a key parameter required in encryption/decryption.
S708. The second network device receives the indication information of the second information exchange sent by the first network device.
S709. The second network device sends the first encryption/decryption parameter of the second information to the first network device.
S710. The first network device receives the first encryption/decryption parameter that is of the second information and that is sent by the second network device.
S711. The first network device sends a second encryption/decryption parameter request message to the UE, where the second encryption/decryption parameter request message is used to request a second encryption/decryption algorithm parameter of the second information.
S712. The UE receives the second encryption/decryption parameter request message sent by the first network device.
S713. The UE sends the second encryption/decryption algorithm parameter of the second information to the first network device.
S714. The first network device receives the second encryption/decryption algorithm parameter that is of the second information and that is sent the UE.

For example, if the mobile communications system is an LTE system, the first network device is an eNB, the second network device is an MME, and the UE may send the second encryption/decryption parameter of the second information to the eNB by using a security mode, where the second encryption/decryption parameter is an algorithm parameter required in encryption/decryption.

Then, the first network device may encrypt the second information by using the first encryption parameter and the second encryption parameter of the second information. After the UE receives the second information sent by the first network device, the UE may decrypt the second information by using the second decryption parameter of the second information, to obtain the second information. Details are not described in this embodiment of the present disclosure.

It can be learned that, when the UE establishes the transmission bearer in the idle state and transfers the second information, the second information can be encrypted on the air interface, so that information transmission security is improved.

It should be noted that the foregoing encryption/decryption may also include a parameter corresponding to integrity protection. When there is no second network device, there is no need to obtain the first encryption/decryption parameter of the second information by using the foregoing process. Further, the first network device may obtain all encryption/decryption parameters from the UE or the second network device, and does not need to separately obtain the encryption/decryption parameters from both UE and the second network device.

In addition, it should be further noted that, the first indication information and the second indication information that are used to instruct to establish the radio bearer between the UE and the first network device may be one indication instruction, or may be an indication instruction carrying specific information.

Based on the information exchange method provided, the UE first sends the first information to the bottom layer by using the RAC layer, and then the bottom layer sends the first information to the first network device by using the radio bearer for exchanging the first information between the UE and the first network device, so that information exchange between the UE and the network is implemented, and the first network device can perform service adjustment or optimization according to the obtained first information, thereby ensuring proper resource configuration and usage, and improving user experience.

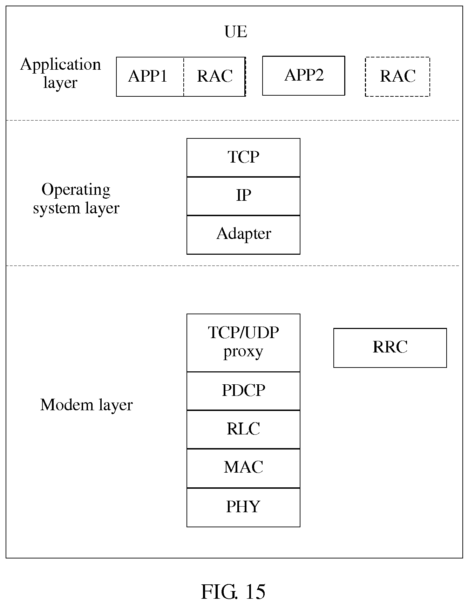

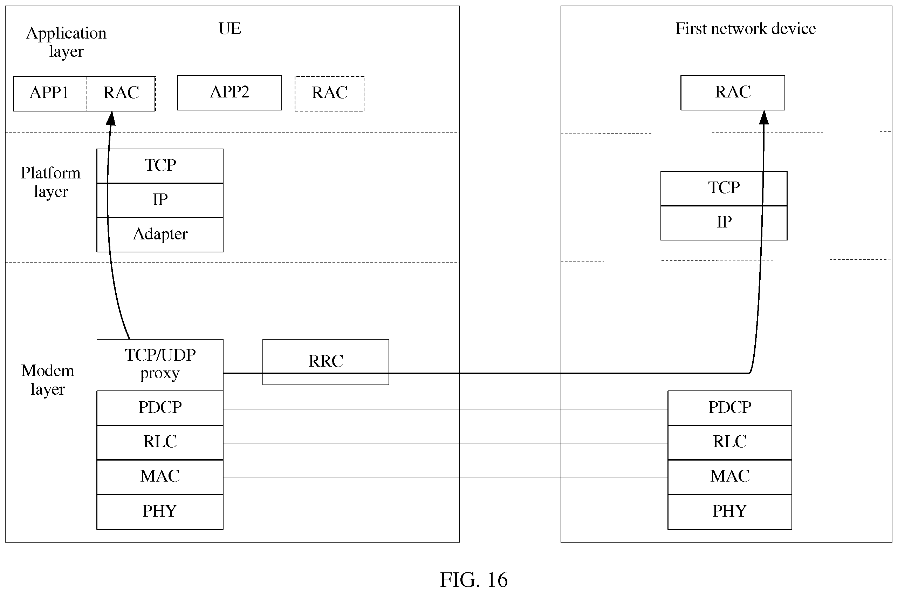

An sample further provides a schematic diagram of a hierarchical architecture of another UE, as shown in FIG. 15. Referring to FIG. 15, an RAC layer is also added into the UE, and a function and a specific location of the RAC layer are the same as those of the RAC layer in FIG. 4. For details, refer to the foregoing description, and details are not described herein again. In addition, when the RAC layer is added, a TCP proxy/a UDP proxy is introduced into a modem layer of the UE. In this way, after a bearer for exchanging first information between the UE and a first network device is established, a header of the first information may be removed by using the TCP proxy/the UDP proxy, and the first information may be sent to the first network device by using the radio bearer for exchanging the first information between the UE and the first network device. In addition, there is no need to introduce a TCP/IP (or UDP/IP) layer to the first network device side. For details, refer to a schematic diagram of an information transmission trend shown in FIG. 16.

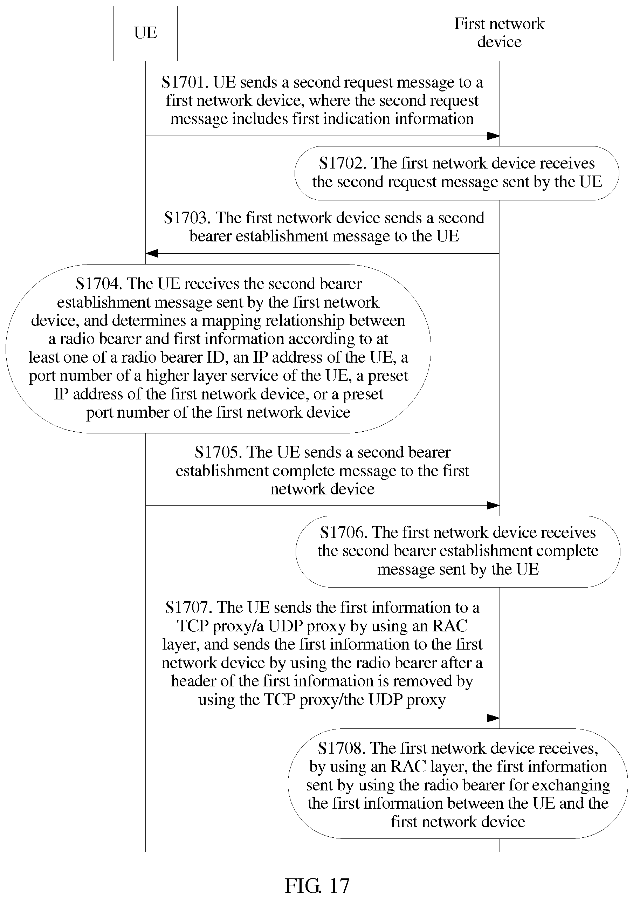

Based on the schematic diagram of the hierarchical architecture of the UE shown in FIG. 15, an example provides another information exchange method. As shown in FIG. 17, the method includes the following steps.

S1701. UE sends a second request message to a first network device, where the second request message includes first indication information.

The first indication information is used to instruct to establish a radio bearer for exchanging first information between the UE and the first network device.
S1702. The first network device receives the second request message sent by the UE.
S1703. The first network device sends a second bearer establishment message to the UE.

The second bearer establishment message includes at least one of a radio bearer ID assigned by the first network device to the UE, an IP address of the UE, a port number of a higher layer service of the UE, a preset IP address of the first network device, and a preset port number of the first network device.
S1704. The UE receives the second bearer establishment message sent by the first network device, and determines a mapping relationship between the radio bearer and the first information according to at least one of the radio bearer ID, the IP address of the UE, the port number of the higher layer service of the UE, the preset IP address of the first network device, and the preset port number of the first network device.
S1705. The UE sends a second bearer establishment complete message to the first network device.
S1706. The first network device receives the second bearer establishment complete message sent by the UE.
S1707. The UE sends the first information to a TCP proxy/a UDP proxy by using an RAC layer, and sends the first information to the first network device by using the radio bearer after a header of the first information is removed by using the TCP proxy/the UDP proxy.
S1708. The first network device receives, by using an RAC layer, the first information sent by the UE by using the radio bearer for exchanging the first information between the UE and the first network device.

Hereto, exchange of the first information from the UE to the first network device is completed.

Further, the information exchange method provided may further include the following steps:

S1709. The first network device sends second information to the UE by using the radio bearer.

The second information includes at least one of the following information: cell load information, cell edge indication information, handover indication information, and bit rate handover indication information.
S1710. The UE receives the second information sent by the first network device by using the radio bearer.
S1711. A bottom layer of the UE sends the second information to the RAC layer of the UE, and the RAC layer of the UE performs service adjustment according to the second information.

It can be learned that not only the first information can be transmitted from the UE to the first network device, but also the second information can be transmitted from the first network device to the UE. In this way, related applications of the application layer of the UE can perform service adjustment by well using network information, so that user experience is ensured.

For example, a video service is used as an example. In a video playing phase, after the UE reports the first information to the network, the network may determine that the UE is in an initial video wait phase according to the first information, and then the network accelerates scheduling of a downlink data packet of the UE according to the first information, to ensure that the data packet can rapidly reach the UE for playing. This ensures proper resource configuration and usage, reduces a user wait delay, and improves user experience.

Preferably, to ensure the exchanged information security, the information exchange method may further include the following steps.
S1712. The first network device sends an encryption/decryption parameter request message to the UE, where the encryption/decryption parameter request message is used to request an encryption/decryption parameter of the second information.
S1713. The UE receives the encryption/decryption parameter request message sent by the first network device.
S1714. The UE sends an encryption/decryption algorithm parameter of the second information to the first network device.
S1715. The first network device receives the encryption/decryption algorithm parameter that is of the second information and that is sent by the UE.

Then, the first network device may encrypt the second information by using the encryption parameter of the second information, and sends the encrypted second information to the UE by using the radio bearer. After receiving the second information sent by the first network device, the UE may decrypt the second information by using the decryption parameter of the second information, to obtain the second information. Details are not described in this embodiment of the present disclosure.

It can be learned that, when the UE establishes the transmission bearer in the idle state and transfers the second information, the second information can be encrypted on the air interface, so that information transmission security is improved.

In addition, it should be further noted that, the indication that is used to instruct to establish the radio bearer between the UE and the first network device may be one indication instruction, or may be an indication instruction carrying specific information.

Based on the information exchange method provided in this example, the UE first sends the first information to a bottom-layer proxy by using the RAC layer, and then the bottom-layer proxy sends the first information to the first network device by using the radio bearer for exchanging the first information between the UE and the first network device, so that information exchange between the UE and the network is implemented, and the first network device can perform service adjustment or optimization according to the obtained first information, thereby ensuring proper resource configuration and usage, and improving user experience.

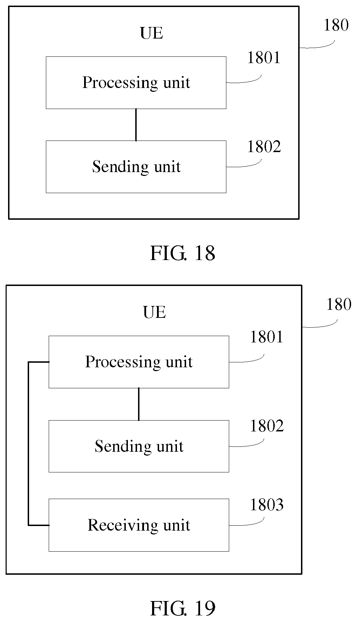

An embodiment of the present disclosure further provides UE 180, as shown in FIG. 18, including: a processing unit 1801 and a sending unit 1802.

The processing unit 1801 is configured to establish a radio bearer for exchanging first information between the UE 180 and a first network device.

The sending unit 1802 is configured to send the first information to the first network device by using the radio bearer.

The UE 180 includes a radio access network application control (RAC) layer, the first information is information sent by the RAC layer of the UE 180 to a bottom layer of the UE 180, and the first information includes at least one of the following information: service information of the UE 180, sensor information of the UE 180, user behavior information, and status information of the UE 180.

The processing unit 1801 is further configured to: send a first request message to a second network device, so that the second network device establishes, according to the first request message, the radio bearer for exchanging the first information between the UE 180 and the first network device, where the first request message includes first indication information, and the first indication information is used to instruct to establish the radio bearer for exchanging the first information between the UE 180 and the first network device; receive a first bearer establishment message sent by the first network device, where the first bearer establishment message includes a first configuration message and a second configuration message, the first configuration message includes at least one of an IP address of the UE 180, a port number of a higher layer service of the UE 180, an IP address of the first network device, and a port number of the first network device, and the second configuration message includes a radio bearer ID assigned by the first network device to the UE 180; determine a mapping relationship between the radio bearer and the first information according to the first configuration message and the second configuration message; and send a first bearer establishment complete message to the first network device.

In an example, the processing unit 1801 may be further configured to: send a first initial message to the first network device, so that the first network device sends a second initial message to a second network device, and the second network device establishes, according to the second initial message, the radio bearer for exchanging the first information between the UE 180 and the first network device, where the first initial message and the second initial message include first indication information, and the first indication information is used to instruct to establish the radio bearer for exchanging the first information between the UE 180 and the first network device; receive a first bearer establishment message sent by the first network device, where the first bearer establishment message includes a first configuration message and second configuration message, the first configuration message includes at least one of an IP address of the UE 180, a port number of a higher layer service of the UE 180, an IP address of the first network device, and a port number of the first network device, and the second configuration message includes a radio bearer ID assigned by the first network device to the UE 180; determine a mapping relationship between the radio bearer and the first information according to the first configuration message and the second configuration message; and send a first bearer establishment complete message to the first network device.

In still another example, the processing unit 1801 may be further configured to: send a second request message to the first network device, where the second request message includes first indication information, and the first indication information is used to instruct to establish the radio bearer for exchanging the first information between the UE and the first network device; receive a second bearer establishment message sent by the first network device, where the second bearer establishment message includes at least one of a radio bearer ID assigned by the first network device to the UE, an IP address of the UE, a port number of a higher layer service of the UE, a preset IP address of the first network device, and a preset port number of the first network device; determine a mapping relationship between the radio bearer and the first information according to at least one of the radio bearer ID, the IP address of the UE, the port number of the higher layer service of the UE, the preset IP address of the first network device, and the preset port number of the first network device; and send a second bearer establishment complete message to the first network device.

Further, as shown in FIG. 19, the UE 180 provided in this embodiment of the present disclosure may further include a receiving unit 1803.

The receiving unit 1803 is configured to receive a paging message sent by the first network device, where the paging message includes second indication information, and the second indication information is used to instruct to establish the radio bearer for exchanging the first information between the UE 180 and the first network device.

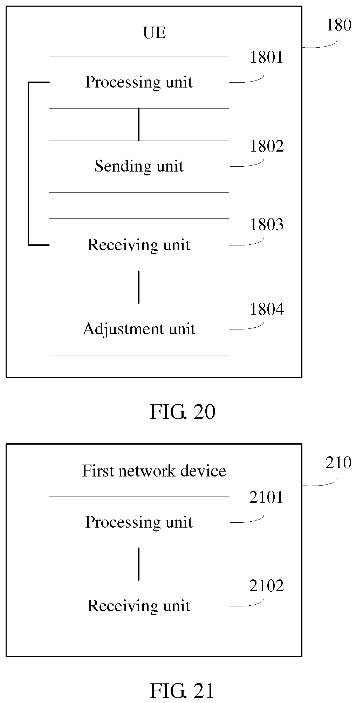

Still further, as shown in FIG. 20, the UE 180 provided in this embodiment of the present disclosure may further include an adjustment unit 1804.

The receiving unit 1803 may be further configured to receive second information sent by the first network device by using the radio bearer.

The adjustment unit 1804 is configured to perform service adjustment according to the second information.

The second information includes at least one of the following information: cell load information, cell edge indication information, handover indication information, and bit rate handover indication information.

For example, for the method for exchanging the first information that is performed by the first network device and the UE that are provided in this embodiment of the present disclosure, refer to the foregoing description in the embodiment of the present disclosure, and details are not described herein.

Based on the UE provided in this embodiment of the present disclosure, the RAC layer first sends the first information to the bottom layer, and then the bottom layer sends the first information to the first network device by using the radio bearer for exchanging the first information between the UE and the first network device, so that information exchange between the UE and a network is implemented, and the first network device can perform service adjustment or optimization according to the obtained first information, thereby ensuring proper resource configuration and usage, and improving user experience.

An embodiment of the present disclosure further provides a first network device 210. As shown in FIG. 21, the first network device 210 includes an RAC layer, and the first network device 210 further includes: a processing unit 2101 and a receiving unit 2102.

The processing unit 2101 is configured to establish a radio bearer for exchanging first information between the first network device 210 and UE.

The receiving unit 2102 is configured to receive, by using the RAC layer, the first information sent by the UE by using the radio bearer.

The first information is information sent by an RAC layer of the UE to a bottom layer of the UE, and the first information includes at least one of the following information: service information of the UE, sensor information of the UE, user behavior information, and status information of the UE.

The processing unit 2101 is further configured to: receive a setting request message sent by a second network device, where the setting request message includes a first configuration message, and the first configuration message includes at least one of an IP address of the UE, a port number of a higher layer service of the UE, an IP address of the first network device 210, and a port number of the first network device 210; send a first bearer establishment message to the UE, where the first bearer establishment message includes the first configuration message and a second configuration message, and the second configuration message includes a radio bearer identity (ID) assigned by the first network device to the UE; and receive a first bearer establishment complete message sent by the UE.

In an example, the processing unit 2101 may be further configured to: receive a first initial message sent by the UE, and send a second initial message to a second network device, so that the second network device establishes, according to the second initial message, the radio bearer for exchanging the first information between the UE and the first network device 210, where the first initial message and the second initial message include first indication information, and the first indication information is used to instruct to establish the radio bearer for exchanging the first information between the UE and the first network device 210; receive a setting request message sent by the second network device, where the setting request message includes a first configuration message, and the first configuration message includes at least one of an IP address of the UE, a port number of a higher layer service of the UE, an IP address of the first network device 210, and a port number of the first network device 210; send a first bearer establishment message to the UE, where the first bearer establishment message includes the first configuration message and a second configuration message, and the second configuration message includes a radio bearer ID assigned by the first network device to the UE; and receive a first bearer establishment complete message sent by the UE.

In still another example, the processing unit 2101 may be further configured to: receive a second request message sent by the UE, where the second request message includes first indication information, and the first indication information is used to instruct to establish the radio bearer for exchanging the first information between the UE and the first network device; send a second bearer establishment message to the UE, where the second bearer establishment message includes at least one of a radio bearer ID assigned by the first network device to the UE, an IP address of the UE, a port number of a higher layer service of the UE, a preset IP address of the first network device, and a preset port number of the first network device; and receive a second bearer establishment complete message sent by the UE.

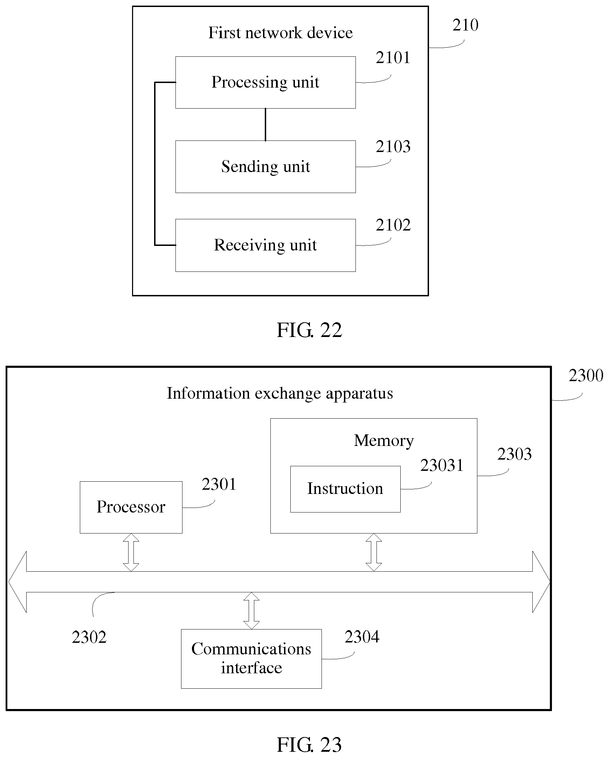

Further, as shown in FIG. 22, the first network device 210 provided in this embodiment of the present disclosure may further include a sending unit 2103.

The sending unit 2103 is configured to: before the receiving unit 2102 receives, by using the RAC layer, the first information sent by the UE by using the radio bearer, send a paging message to the UE, where the paging message includes second indication information, and the second indication information is used to establish the radio bearer for exchanging the first information between the UE and the first network device 210.

Still further, the sending unit 2103 may be further configured to: send second information to the UE by using the radio bearer.

The second information includes at least one of the following information: cell load information, cell edge indication information, handover indication information, and bit rate handover indication information.

For example, for the method for exchanging the first information that is performed by the first network device and the UE that are provided in this embodiment of the present disclosure, refer to the foregoing description in the embodiment of the present disclosure, and details are not described herein.

The first network device provided in this embodiment of the present disclosure may receive the first information sent by the UE by using the radio bearer for exchanging the first information between the UE and the first network device, so that information exchange between the UE and a network is implemented, and the first network device can perform service adjustment or optimization according to the obtained first information, thereby ensuring proper resource configuration and usage, and improving user experience.

Corresponding to the foregoing method embodiment, an example provides an information exchange apparatus. As shown in FIG. 23, an information exchange apparatus 2300 includes: a processor 2301, a memory 2303, a bus 2302, and a communications interface 2304. The processor 2301, the memory 2303, and the communications interface 2304 are connected and communicate with each other by using the bus 2302.

The processor 2301 may be a single-core or multi-core central processing unit, or an application-specific integrated circuit, or one or more integrated circuits configured to implement this embodiment of the present disclosure.

The memory 2303 may be a high-speed random access memory (RAM), or may be a non-volatile memory, for example, at least one magnetic disk memory.

The memory 2303 is configured to store a computer-executable instruction 23031. For example, the computer-executable instruction 23031 may include program code.

When the information exchange apparatus 2300 runs, the processor 2301 executes the computer-executable instruction 23031, and may execute the information exchange method procedure of the UE side or the first network device side in any one of the methods in FIG. 7 to FIG. 14B and FIG. 17. When the information exchange method procedure of the UE side in any one of the methods in FIG. 7 to FIG. 14B and FIG. 17 is executed, the information exchange apparatus 2300 is the UE. When the information exchange method procedure of the first network device side in any one of the methods in FIG. 7 to FIG. 14B and FIG. 17 is executed, the information exchange apparatus 2300 is the first network device.

Because the information exchange apparatus 2300 can be used to execute the foregoing methods, for technical effects that the information exchange apparatus 2300 can achieve, refer to the description in the foregoing methods. Details are not described herein.

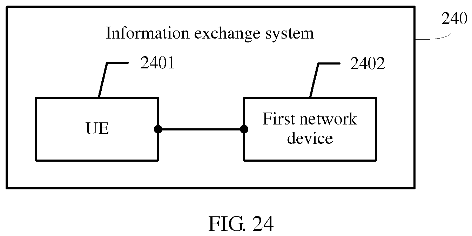

Corresponding to the foregoing method, an example provides an information exchange system 240. As shown in FIG. 24, the information exchange system includes UE 2401 and a first network device 2402.

The UE 2401 may be UE having functions of the UE 180 in the foregoing embodiment, and the first network device 2402 may be a first network device having functions of the first network device 210 in the foregoing embodiment.

For example, for the information exchange method that is performed by using the information exchange system 240 provided, refer to the foregoing method embodiments.

Because the information exchange system 240 can be used to execute the foregoing methods, for technical effects that the information exchange system 240 can achieve, refer to the description in the foregoing method embodiments. Details are not described herein.

In addition, a computer readable medium (or medium) is further provided as an example, including a computer readable instruction that performs the following operations when being executed: executing operations of any device in the methods shown in FIG. 7 to FIG. 14B and FIG. 17.

In addition, a computer program product is further provided as an example, including the foregoing computer readable medium.

In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present disclosure essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present disclosure. The foregoing storage medium includes: any medium that can store program code, such as a USB flash drive, a removable hard disk, a read-only memory (ROM), a random access memory (RAM), a magnetic disk, or an optical disc.

The protection scope of the present disclosure shall be subject to the protection scope of the claims.

## Claims

1. An information exchange method, comprising:
establishing (S701), by user equipment, UE, with a first network device, a radio bearer for exchanging first information; and
sending (S702), by the UE, the first information to the first network device by using the radio bearer;
wherein the UE comprises a radio access network application control, RAC, layer, the RAC layer of the UE is located at a framework layer of the UE or an application layer of the UE;
the method further comprises: collecting, by the RAC layer of the UE, the first information, and transmitting, by the RAC layer of the UE, the first information to a bottom layer of the UE;
wherein the sending the first information to the first network device by using the radio bearer comprises: sending, by the bottom layer of the UE, the first information to a bottom layer of the first network device;
wherein the bottom layer of the UE and the bottom layer of the first network device include a packet data convergence protocol, PDCP, layer, a radio link control, RLC, layer, a medium access control, MAC, layer and a physical, PHY, layer; and
the first information is information about the application layer of the UE and the first information comprises at least one of the following information: service information of the UE, sensor information of the UE, user behavior information, and status information of the UE;
wherein the establishing, by the UE with the first network device, the radio bearer for exchanging the first information comprises:
sending (S801), by the UE, a first request message to a second network device for establishing, according to the first request message, the radio bearer for exchanging the first information between the UE and the first network device, wherein the first request message comprises first indication information, and the first indication information is used to instruct to establish the radio bearer for exchanging the first information between the UE and the first network device;
receiving (S806), by the UE, a first bearer establishment message sent by the first network device, wherein the first bearer establishment message comprises a first configuration message and a second configuration message, the first configuration message comprises at least one of an IP address of the UE, a port number of a higher layer service of the UE, an IP address of the first network device, and a port number of the first network device, and the second configuration message comprises a radio bearer identity, ID, assigned by the first network device to the UE;
determining (S807), by the UE, a mapping relationship between the radio bearer and the first information according to the first configuration message and the second configuration message; and
sending (S808), by the UE, a first bearer establishment complete message to the first network device.

2. The method according to claim 1, wherein the service information of the UE includes at least one of the following information: service identity information, request indication class information, service cache information, to-be-received data information, service status information, local routing information, TCP proxy information, and data routing information;
the sensor information of the UE includes at least one of the following information: a moving rate of the UE, a moving track of the UE, and moving direction information of the UE;
the user behavior information includes at least one of the following information: service disabling, service suspension, screen locking, and user power off; or
the status information of the UE includes at least one of the following information: a battery level of the UE, a screen resolution of the UE, or a screen size of the UE.

3. User equipment, UE, comprising: a processing unit (1801) and a sending unit (1802), **characterized in that**,
the processing unit (1801) is configured to establish a radio bearer for exchanging first information between the UE and a first network device;
the sending unit (1802) is configured to send the first information to the first network device by using the radio bearer; and
the UE comprises a radio access network application control, RAC, layer, the RAC layer of the UE is located at a framework layer of the UE or an application layer of the UE;
the RAC layer of the UE is configured to collect the first information and transmit the first information to a bottom layer of the UE; wherein the first information is sent by using the bottom layer of the UE to a bottom layer of the first network device;
wherein the bottom layer of the UE and the bottom layer of the first network device include a packet data convergence protocol, PDCP, layer, a radio link control, RLC, layer, a medium access control, MAC, layer and a physical, PHY, layer;
the first information is information about the application layer of the UE and the first information comprises at least one of the following information: service information of the UE, sensor information of the UE, user behavior information, and status information of the UE; and
the processing unit (1801) is further configured to:
send a first request message to a second network device for establishing, according to the first request message, the radio bearer for exchanging the first information between the UE and the first network device, wherein the first request message comprises first indication information, and the first indication information is used to instruct to establish the radio bearer for exchanging the first information between the UE and the first network device;
receive a first bearer establishment message sent by the first network device, wherein the first bearer establishment message comprises a first configuration message and a second configuration message, the first configuration message comprises at least one of an IP address of the UE, a port number of a higher layer service of the UE, an IP address of the first network device, and a port number of the first network device, and the second configuration message comprises a radio bearer identity, ID, assigned by the first network device to the UE;
determine a mapping relationship between the radio bearer and the first information according to the first configuration message and the second configuration message; and
send a first bearer establishment complete message to the first network device.

4. The UE according to claim 3, wherein the service information of the UE includes at least one of the following information: service identity information, request indication class information, service cache information, to-be-received data information, service status information, local routing information, TCP proxy information, and data routing information;
the sensor information of the UE includes at least one of the following information: a moving rate of the UE, a moving track of the UE, and moving direction information of the UE;
the user behavior information includes at least one of the following information: service disabling, service suspension, screen locking, and user power off; or
the status information of the UE includes at least one of the following information: a battery level of the UE, a screen resolution of the UE, or a screen size of the UE.

5. The UE according to claim 3 or 4, wherein the UE further comprises a receiving unit (1803), wherein
the receiving unit (1803) is configured to receive a paging message sent by the first network device, wherein the paging message comprises second indication information, and the second indication information is used to instruct to establish the radio bearer for exchanging the first information between the UE and the first network device.

6. The UE according to any one of claims 3 to 5, wherein the UE further comprises a receiving unit (1803) and an adjustment unit (1804), wherein
the receiving unit (1803) is configured to receive second information sent by the first network device by using the radio bearer, wherein the second information comprises at least one of the following information: cell load information, cell edge indication information, handover indication information, and bit rate handover indication information; and
the adjustment unit (1804) is configured to perform service adjustment according to the second information.

7. A first network device, wherein the first network device comprises a radio access network application control, RAC, layer, and the first network device further comprises: a processing unit (2101) and a receiving unit (2102); **characterized in that**,
the processing unit (2101) is configured to establish a radio bearer for exchanging first information between the first network device and user equipment, UE; and
the receiving unit (2102) is configured to receive, by using the RAC layer, the first information sent by the UE by using the radio bearer; wherein the first information is sent from a bottom layer of the UE to a bottom layer of the first network device, and a transmission control protocol/internet protocol ,TCP/IP, layer or a user datagram protocol/internet protocol, UDP/IP, layer of the first network device is configured to: after the first information reaches the bottom layer of the first network device, transfer the first information to the RAC layer of the first network device;
wherein the bottom layer of the UE and the bottom layer of the first network device include a packet data convergence protocol, PDCP, layer, a radio link control, RLC, layer, a medium access control, MAC, layer and a physical, PHY, layer; and
the first information is information about an application layer of the UE and the first information comprises at least one of the following information: service information of the UE, sensor information of the UE, user behavior information, and status information of the UE;
wherein the processing unit (2101) is further configured to:
receive a setting request message sent by a second network device, wherein the setting request message comprises a first configuration message, and the first configuration message comprises at least one of an IP address of the UE, a port number of a higher layer service of the UE, an IP address of the first network device, and a port number of the first network device;
send a first bearer establishment message to the UE, wherein the first bearer establishment message comprises the first configuration message and a second configuration message, and the second configuration message comprises a radio bearer identity, ID, assigned by the first network device to the UE; and
receive a first bearer establishment complete message sent by the UE.

8. The first network device according to claim 7, wherein the service information of the UE includes at least one of the following information: service identity information, request indication class information, service cache information, to-be-received data information, service status information, local routing information, TCP proxy information, and data routing information;
the sensor information of the UE includes at least one of the following information: a moving rate of the UE, a moving track of the UE, and moving direction information of the UE;
the user behavior information includes at least one of the following information: service disabling, service suspension, screen locking, and user power off; or
the status information of the UE includes at least one of the following information: a battery level of the UE, a screen resolution of the UE, or a screen size of the UE.

9. The first network device according to claim 7 or 8, wherein the first network device further comprises a sending unit (2103); and
the sending unit (2103) is configured to, before the receiving unit (2102) receives, by using the RAC layer, the first information sent by the UE by using the radio bearer, send a paging message to the UE, wherein the paging message comprises second indication information, and the second indication information is used to establish the radio bearer for exchanging the first information between the UE and the first network device.

10. The first network device according to any one of claims 7 to 9, wherein the first network device further comprises a sending unit (2103), configured to send second information to the UE by using the radio bearer, wherein the second information comprises at least one of the following information: cell load information, cell edge indication information, handover indication information, and bit rate handover indication information.

## Patentansprüche

1. Informationsaustauschverfahren, umfassend:
Herstellen (S701), von einer Benutzerausrüstung, UE, mit einer ersten Netzwerkvorrichtung, eines Funkträgers zum Austausch erster Information; und
Senden (S702), von der UE, der ersten Information an die erste Netzwerkvorrichtung mithilfe des Funkträgers;
wobei die UE eine Funkzugriffsnetzwerk-Anwendungssteuerungs-, RAC-, Schicht umfasst, sich die RAC-Schicht der UE an einer Rahmenschicht der UE oder einer Anwendungsschicht der UE befindet;
das Verfahren ferner Folgendes umfasst: Sammeln, von der RAC-Schicht der UE, der ersten Information, und Übertragen, von der RAC-Schicht der UE, der ersten Information an eine untere Schicht der UE;
wobei das Senden der ersten Information an die erste Netzwerkvorrichtung mithilfe des Funkträgers Folgendes umfasst: Senden, von der unteren Schicht der UE, der ersten Information an eine untere Schicht der ersten Netzwerkvorrichtung;
wobei die untere Schicht der UE und die untere Schicht der ersten Netzwerkvorrichtung eine Paketdatenkonvergenzprotokoll-, PDCP-, Schicht, eine Funkverbindungssteuerungs-, RLC-, Schicht, eine Mediumzugriffssteuerungs-, MAC-, Schicht und eine physische, PHY-, Schicht enthalten; und
die erste Information Information über die Anwendungsschicht der UE ist und die erste Information mindestens eine der folgenden Informationen umfasst:
Dienstinformation der UE, Sensorinformation der UE, Nutzerverhaltensinformation und Statusinformation der UE;
wobei das Herstellen, von der UE mit der ersten Netzwerkvorrichtung, des Funkträgers zum Austausch der ersten Information Folgendes umfasst:
Senden (S801), von der UE, einer ersten Anforderungsnachricht an eine zweite Netzwerkvorrichtung zum Herstellen, gemäß der ersten Anforderungsnachricht, des Funkträgers zum Austausch der ersten Information zwischen der UE und der ersten Netzwerkvorrichtung, wobei die erste Anforderungsnachricht erste Angabeinformation umfasst und die erste Angabeinformation dafür genutzt wird, anzuweisen, den Funkträger zum Austausch der ersten Information zwischen der UE und der ersten Netzwerkvorrichtung herzustellen;
Empfangen (S806), von der UE, einer ersten Trägerherstellungsnachricht, die von der ersten Netzwerkvorrichtung gesendet wird, wobei die erste Trägerherstellungsnachricht eine erste Konfigurationsnachricht und eine zweite Konfigurationsnachricht umfasst, die erste Konfigurationsnachricht mindestens eine von einer IP-Adresse der UE, einer Portnummer eines Dienstes einer höheren Schicht der UE, einer IP-Adresse der ersten Netzwerkvorrichtung und einer Portnummer der ersten Netzwerkvorrichtung umfasst, und die zweite Konfigurationsnachricht eine Funkträgeridentität, ID, umfasst, die von der ersten Netzwerkvorrichtung der UE zugewiesen wird;
Bestimmen (S807), von der UE, einer Abbildungsbeziehung zwischen dem Funkträger und der ersten Information gemäß der ersten Konfigurationsnachricht und der zweiten Konfigurationsnachricht; und
Senden (S808), von der UE, einer ersten Trägerherstellungs-Fertigstellungsnachricht an die erste Netzwerkvorrichtung.

2. Verfahren nach Anspruch 1, wobei die Dienstinformation der UE mindestens eine der folgenden Informationen enthält: Dienstidentitätsinformation, Anforderungsangabeklassen-Information, Dienstzwischenspeicher-Information, Information über zu empfangende Daten, Dienststatusinformation, Information über lokales "Routing", TCP-Proxy-Information und Daten-"Routing"-Information;
die Sensorinformation der UE mindestens eine der folgenden Informationen enthält:
eine Bewegungsrate der UE, eine sich bewegende Spur der UE, und Bewegungsrichtungsinformation der UE;
die Nutzerverhaltensinformation mindestens eine der folgenden Informationen enthält: Dienstdeaktivierung, Dienstaussetzung, Bildschirmsperrung, und Benutzerabschaltung; oder
die Statusinformation der UE mindestens eine der folgenden Informationen enthält: einen Batteriestand der UE, eine Bildschirmauflösung der UE oder eine Bildschirmgröße der UE.

3. Benutzerausrüstung, UE, umfassend: eine Verarbeitungseinheit (1801) und eine Sendeeinheit (1802), **dadurch gekennzeichnet, dass**
die Verarbeitungseinheit (1801) dazu ausgebildet ist, einen Funkträger zum Austausch erster Information zwischen der UE und einer ersten Netzwerkvorrichtung herzustellen;
die Sendeeinheit (1802) dazu ausgebildet ist, die erste Information mithilfe des Funkträgers an die erste Netzwerkvorrichtung zu senden; und
die UE eine Funkzugriffsnetzwerk-Anwendungssteuerungs-, RAC-, Schicht umfasst, sich die RAC-Schicht der UE an einer Rahmenschicht der UE oder einer Anwendungsschicht der UE befindet;
die RAC-Schicht der UE dazu ausgebildet ist, die erste Information zu sammeln und die erste Information an eine untere Schicht der UE zu übertragen; wobei die erste Information mithilfe der unteren Schicht der UE an eine untere Schicht der ersten Netzwerkvorrichtung gesendet wird;
wobei die untere Schicht der UE und die untere Schicht der ersten Netzwerkvorrichtung eine Paketdatenkonvergenzprotokoll-, PDCP-, Schicht, eine Funkverbindungssteuerungs-, RLC-, Schicht, eine Mediumzugriffssteuerungs-, MAC-, Schicht und eine physische, PHY-, Schicht enthalten;
die erste Information Information über die Anwendungsschicht der UE ist und die erste Information mindestens eine der folgenden Informationen umfasst:
Dienstinformation der UE, Sensorinformation der UE, Nutzerverhaltensinformation und Statusinformation der UE; und
die Verarbeitungseinheit (1801) ferner dazu ausgebildet ist:
eine erste Anforderungsnachricht an eine zweite Netzwerkvorrichtung zum Herstellen, gemäß der ersten Anforderungsnachricht, des Funkträgers zum Austausch der ersten Information zwischen der UE und der ersten Netzwerkvorrichtung zu senden, wobei die erste Anforderungsnachricht erste Angabeinformation umfasst und die erste Angabeinformation dafür genutzt wird, anzuweisen, den Funkträger zum Austausch der ersten Information zwischen der UE und der ersten Netzwerkvorrichtung herzustellen;
eine erste Trägerherstellungsnachricht zu empfangen, die von der ersten Netzwerkvorrichtung gesendet wird, wobei die erste Trägerherstellungsnachricht eine erste Konfigurationsnachricht und eine zweite Konfigurationsnachricht umfasst, die erste Konfigurationsnachricht mindestens eine von einer IP-Adresse der UE, einer Portnummer eines Dienstes einer höheren Schicht der UE, einer IP-Adresse der ersten Netzwerkvorrichtung und einer Portnummer der ersten Netzwerkvorrichtung umfasst, und die zweite Konfigurationsnachricht eine Funkträgeridentität, ID, umfasst, die von der ersten Netzwerkvorrichtung der UE zugewiesen wird;
eine Abbildungsbeziehung zwischen dem Funkträger und der ersten Information gemäß der ersten Konfigurationsnachricht und der zweiten Konfigurationsnachricht zu bestimmen; und
eine erste Trägerherstellungs-Fertigstellungsnachricht an die erste Netzwerkvorrichtung zu senden.

4. UE nach Anspruch 3, wobei die Dienstinformation der UE mindestens eine der folgenden Informationen enthält: Dienstidentitätsinformation, Anforderungsangabeklassen-Information, Dienstzwischenspeicher-Information, Information über zu empfangende Daten, Dienststatusinformation, Information über lokales "Routing", TCP-Proxy-Information und Daten-"Routing"-Information;
die Sensorinformation der UE mindestens eine der folgenden Informationen enthält:
eine Bewegungsrate der UE, eine sich bewegende Spur der UE, und Bewegungsrichtungsinformation der UE;
die Nutzerverhaltensinformation mindestens eine der folgenden Informationen enthält: Dienstdeaktivierung, Dienstaussetzung, Bildschirmsperrung, und Benutzerabschaltung; oder
die Statusinformation der UE mindestens eine der folgenden Informationen enthält: einen Batteriestand der UE, eine Bildschirmauflösung der UE oder eine Bildschirmgröße der UE.

5. UE nach Anspruch 3 oder 4, wobei die UE ferner eine Empfangseinheit (1803) umfasst, wobei
die Empfangseinheit (1803) dazu ausgebildet ist, eine Funkrufnachricht zu empfangen, die von der ersten Netzwerkvorrichtung gesendet wird, wobei die Funkrufnachricht zweite Angabeinformation umfasst und die zweite Angabeinformation dafür genutzt wird, anzuweisen, den Funkträger zum Austausch der ersten Information zwischen der UE und der ersten Netzwerkvorrichtung herzustellen.

6. UE nach einem der Ansprüche 3 bis 5, wobei die UE ferner eine Empfangseinheit (1803) und eine Anpassungseinheit (1804) umfasst, wobei
die Empfangseinheit (1803) dazu ausgebildet ist, zweite Information zu empfangen, die von der ersten Netzwerkvorrichtung mithilfe des Funkträgers gesendet wird, wobei die zweite Information mindestens eine der folgenden Informationen umfasst:
Zellenlastinformation, Zellenrand-Angabegabeinformation, Übergabe-Angabeinformation und Bitratenübergabe-Angabeinformation; und
die Anpassungseinheit (1804) dazu ausgebildet ist, Dienstanpassung gemäß der zweiten Information durchzuführen.

7. Erste Netzwerkvorrichtung, wobei die erste Netzwerkvorrichtung eine Funkzugriffsnetzwerk-Anwendungssteuerungs-, RAC-, Schicht umfasst und die erste Netzwerkvorrichtung ferner Folgendes umfasst: eine Verarbeitungseinheit (2101) und eine Empfangseinheit (2102); **dadurch gekennzeichnet, dass**
die Verarbeitungseinheit (2101) dazu ausgebildet ist, einen Funkträger zum Austausch erster Information zwischen der ersten Netzwerkvorrichtung und einer Benutzerausrüstung, UE, herzustellen; und
die Empfangseinheit (2102) dazu ausgebildet ist, mithilfe der RAC-Schicht die erste Information zu empfangen, die von der UE mithilfe des Funkträgers gesendet wird; wobei
die erste Information von einer unteren Schicht der UE an eine untere Schicht der ersten Netzwerkvorrichtung gesendet wird und eine "Transmission Control Protocol/Intemet Protocol", TCP/IP-, Schicht oder eine "User Datagram Protocol/Internet Protocol", UDP/IP-, Schicht der ersten Netzwerkvorrichtung dazu ausgebildet ist: die erste Information an die RAC-Schicht der ersten Netzwerkvorrichtung zu übermitteln, nachdem die erste Information die untere Schicht der ersten Netzwerkvorrichtung erreicht;
wobei die untere Schicht der UE und die untere Schicht der ersten Netzwerkvorrichtung eine Paketdatenkonvergenzprotokoll-, PDCP-, Schicht, eine Funkverbindungssteuerungs-, RLC-, Schicht, eine Mediumzugriffssteuerungs-, MAC-, Schicht und eine physische, PHY-, Schicht enthalten; und
die erste Information Information über eine Anwendungsschicht der UE ist und die erste Information mindestens eine der folgenden Informationen umfasst:
Dienstinformation der UE, Sensorinformation der UE, Nutzerverhaltensinformation und Statusinformation der UE;
wobei die Verarbeitungseinheit (2101) ferner dazu ausgebildet ist:
eine Einstellungsanforderungsnachricht zu empfangen, die von einer zweiten Netzwerkvorrichtung gesendet wird, wobei die Einstellungsanforderungsnachricht eine erste Konfigurationsnachricht umfasst und die erste Konfigurationsnachricht mindestens eine einer IP-Adresse der UE, einer Portnummer eines Dienstes einer höheren Schicht der UE, einer IP-Adresse der ersten Netzwerkvorrichtung und einer Portnummer der ersten Netzwerkvorrichtung umfasst;
eine erste Trägerherstellungsnachricht an die UE zu senden, wobei die erste Trägerherstellungsnachricht die erste Konfigurationsnachricht und eine zweite Konfigurationsnachricht umfasst und die zweite Konfigurationsnachricht eine Funkträgeridentität, ID, umfasst, die von der ersten Netzwerkvorrichtung der UE zugewiesen wird; und
eine erste Trägerherstellungs-Fertigstellungsnachricht zu empfangen, die von der UE gesendet wird.

8. Erste Netzwerkvorrichtung nach Anspruch 7, wobei die Dienstinformation der UE mindestens eine der folgenden Informationen enthält: Dienstidentitätsinformation, Anforderungsangabeklassen-Information, Dienstzwischenspeicher-Information, Information über zu empfangende Daten, Dienststatusinformation, Information über lokales "Routing", TCP-Proxy-Information und Daten-"Routing"-Information;
die Sensorinformation der UE mindestens eine der folgenden Informationen enthält:
eine Bewegungsrate der UE, eine sich bewegende Spur der UE, und Bewegungsrichtungsinformation der UE;
die Nutzerverhaltensinformation mindestens eine der folgenden Informationen enthält: Dienstdeaktivierung, Dienstaussetzung, Bildschirmsperrung, und Benutzerabschaltung; oder
die Statusinformation der UE mindestens eine der folgenden Informationen enthält: einen Batteriestand der UE, eine Bildschirmauflösung der UE oder eine Bildschirmgröße der UE.

9. Erste Netzwerkvorrichtung nach Anspruch 7 oder 8, wobei die erste Netzwerkvorrichtung ferner eine Sendeeinheit (2103) umfasst; und
die Sendeeinheit (2103) dazu ausgebildet ist, bevor die Empfangseinheit (2102) mithilfe der RAC-Schicht die erste Information empfängt, die von der UE mithilfe des Funkträgers gesendet wird, eine Funkrufnachricht an die UE zu senden, wobei die Funkrufnachricht zweite Angabeinformation umfasst und die zweite Angabeinformation dafür genutzt wird, den Funkträger zum Austausch der ersten Information zwischen der UE und der ersten Netzwerkvorrichtung herzustellen.

10. Erste Netzwerkvorrichtung nach einem der Ansprüche 7 bis 9, wobei die erste Netzwerkvorrichtung ferner eine Sendeeinheit (2103) umfasst, die dazu ausgebildet ist, mithilfe des Funkträgers zweite Information an die UE zu senden, wobei die zweite Information mindestens eine der folgenden Informationen umfasst: Zellenlastinformation, Zellenrand-Angabegabeinformation, Übergabe-Angabeinformation und Bitratenübergabe-Angabeinformation.

## Revendications

1. Procédé d'échange d'informations, comprenant :
l'établissement (S701), par un équipement utilisateur, UE, avec un premier dispositif réseau, d'un support radio pour échanger des premières informations ; et
l'envoi (S702), par l'UE, des premières informations au premier dispositif réseau en utilisant le support radio ;
dans lequel l'UE comprend une couche de commande d'application de réseau d'accès radio, RAC, la couche RAC de l'UE est située sur une couche de structure de l'UE ou une couche d'application de l'UE ;
le procédé comprenant en outre : la collecte, par la couche RAC de l'UE, des premières informations, et la transmission, par la couche RAC de l'UE, des premières informations à une couche inférieure de l'UE ;
dans lequel l'envoi des premières informations au premier dispositif réseau en utilisant le support radio comprend : l'envoi, par la couche inférieure de l'UE, des premières informations à une couche inférieure du premier dispositif réseau ;
dans lequel la couche inférieure de l'UE et la couche inférieure du premier dispositif réseau comprennent une couche de protocole de convergence de données par paquet, PDCP, une couche de commande de liaison radio, RLC, une couche de commande d'accès au support, MAC, et une couche physique, PHY ; et
les premières informations sont des informations concernant la couche d'application de l'UE et les premières informations comprennent au moins l'une des informations suivantes : des informations de service de l'UE, des informations de capteur de l'UE, des informations de comportement d'utilisateur et des informations de statut de l'UE ;
dans lequel l'établissement, par l'UE avec le premier dispositif réseau, du support radio pour échanger les premières informations comprend :
l'envoi (S801), par l'UE, d'un premier message de demande à un deuxième dispositif réseau pour établir, selon le premier message de demande, le support radio pour échanger les premières informations entre l'UE et le premier dispositif réseau, dans lequel le premier message de demande comprend des premières informations d'indication, et les premières informations d'indication sont utilisées pour ordonner l'établissement du support radio pour échanger les premières informations entre l'UE et le premier dispositif réseau ;
la réception (S806), par l'UE, d'un premier message d'établissement de support envoyé par le premier dispositif réseau, dans lequel le premier message d'établissement de support comprend un premier message de configuration et un deuxième message de configuration, le premier message de configuration comprend au moins un élément parmi une adresse IP de l'UE, un numéro de port d'un service de couche supérieure de l'UE, une adresse IP du premier dispositif réseau, et un numéro de port du premier dispositif réseau, et le deuxième message de configuration comprend une identité de support radio, ID, attribuée à l'UE par le premier dispositif réseau ;
la détermination (S807), par l'UE, d'une relation de mappage entre le support radio et les premières informations selon le premier message de configuration et le deuxième message de configuration ; et
l'envoi (S808), par l'UE, d'un premier message de fin d'établissement de support au premier dispositif réseau.

2. Procédé selon la revendication 1, dans lequel les informations de service de l'UE comprennent au moins l'une des informations suivantes : des informations d'identité de service, des informations de classe d'indication de demande, des informations d'antémémoire de service, des informations de données à recevoir, des informations de statut de service, des informations d'acheminement local, des informations de mandataire TCP et des informations d'acheminement de données ;
les informations de capteur de l'UE comprennent au moins l'une des informations suivantes : une vitesse de déplacement de l'UE, une piste de déplacement de l'UE et des informations de direction de déplacement de l'UE ;
les informations de comportement d'utilisateur comprennent au moins l'une des informations suivantes : une désactivation de service, une suspension de service, un verrouillage d'écran, et un arrêt par l'utilisateur ; ou
les informations de statut de l'UE comprennent au moins l'une des informations suivantes : un niveau de batterie de l'UE, une résolution d'écran de l'UE ou une taille d'écran de l'UE.

3. Equipement utilisateur, UE, comprenant : une unité de traitement (1801) et une unité d'envoi (1802), **caractérisé en ce que**
l'unité de traitement (1801) est configurée pour établir un support radio pour échanger des premières informations entre l'UE et un premier dispositif réseau ; l'unité d'envoi (1802) est configurée pour envoyer les premières informations au premier dispositif réseau en utilisant le support radio ; et
l'UE comprend une couche de commande d'application de réseau d'accès radio, RAC, la couche RAC de l'UE étant située sur une couche de structure de l'UE ou une couche d'application de l'UE ;
la couche RAC de l'UE est configurée pour collecter les premières informations et transmettre les premières informations à une couche inférieure de l'UE ; dans lequel les premières informations sont envoyées en utilisant la couche inférieure de l'UE à une couche inférieure du premier dispositif réseau ;
dans lequel la couche inférieure de l'UE et la couche inférieure du premier dispositif réseau comprennent une couche de protocole de convergence de données par paquet, PDCP, une couche de commande de liaison radio, RLC, une couche de commande d'accès au support, MAC, et une couche physique, PHY ;
les premières informations sont des informations concernant la couche d'application de l'UE et les premières informations comprennent au moins l'une des informations suivantes : des informations de service de l'UE, des informations de capteur de l'UE, des informations de comportement d'utilisateur et des informations de statut de l'UE ; et
l'unité de traitement (1801) est en outre configurée pour :
envoyer un premier message de demande à un deuxième dispositif réseau pour établir, selon le premier message de demande, le support radio pour échanger les premières informations entre l'UE et le premier dispositif réseau, dans lequel le premier message de demande comprend des premières informations d'indication, et les premières informations d'indication sont utilisées pour ordonner l'établissement du support radio pour échanger les premières informations entre l'UE et le premier dispositif réseau ;
recevoir un premier message d'établissement de support envoyé par le premier dispositif réseau, dans lequel le premier message d'établissement de support comprend un premier message de configuration et un deuxième message de configuration, le premier message de configuration comprend au moins un élément parmi une adresse IP de l'UE, un numéro de port d'un service de couche supérieure de l'UE, une adresse IP du premier dispositif réseau, et un numéro de port du premier dispositif réseau, et le deuxième message de configuration comprend une identité de support radio, ID, attribuée à l'UE par le premier dispositif réseau ;
déterminer une relation de mappage entre le support radio et les premières informations selon le premier message de configuration et le deuxième message de configuration ; et
envoyer un premier message de fin d'établissement de support au premier dispositif réseau.

4. UE selon la revendication 3, dans lequel les informations de service de l'UE comprennent au moins l'une des informations suivantes : des informations d'identité de service, des informations de classe d'indication de demande, des informations d'antémémoire de service, des informations de données à recevoir, des informations de statut de service, des informations d'acheminement local, des informations de mandataire TCP et des informations d'acheminement de données ;
les informations de capteur de l'UE comprennent au moins l'une des informations suivantes : une vitesse de déplacement de l'UE, une piste de déplacement de l'UE et des informations de direction de déplacement de l'UE ;
les informations de comportement d'utilisateur comprennent au moins l'une des informations suivantes : une désactivation de service, une suspension de service, un verrouillage d'écran et un arrêt par l'utilisateur ; ou
les informations de statut de l'UE comprennent au moins l'une des informations suivantes : un niveau de batterie de l'UE, une résolution d'écran de l'UE ou une taille d'écran de l'UE.

5. UE selon la revendication 3 ou 4, dans lequel l'UE comprend en outre une unité de réception (1803), dans lequel
l'unité de réception (1803) est configurée pour recevoir un message de radiomessagerie envoyé par le premier dispositif réseau, dans lequel le message de radiomessagerie comprend des deuxièmes informations d'indication, et les deuxièmes informations d'indication sont utilisées pour ordonner l'établissement du support radio pour échanger les premières informations entre l'UE et le premier dispositif réseau.

6. UE selon l'une quelconque des revendications 3 à 5, dans lequel l'UE comprend en outre une unité de réception (1803) et une unité de réglage (1804), dans lequel
l'unité de réception (1803) est configurée pour recevoir des deuxièmes informations envoyées par le premier dispositif réseau en utilisant le support radio, dans lequel les deuxièmes informations comprennent au moins l'une des informations suivantes : des informations de charge de cellule, des informations d'indication de pourtour de cellule, des informations d'indication de transfert et des informations d'indication de transfert de débit binaire ; et
l'unité de réglage (1804) est configurée pour effectuer un réglage de service selon les deuxièmes informations.

7. Premier dispositif réseau, dans lequel le premier dispositif réseau comprend une couche de commande d'application de réseau d'accès radio, RAC, et le premier dispositif réseau comprend en outre : une unité de traitement (2101) et une unité de réception (2102) ; **caractérisé en ce que**
l'unité de traitement (2101) est configurée pour établir un support radio pour échanger des premières informations entre le premier dispositif réseau et un équipement utilisateur, UE ; et
l'unité de réception (2102) est configurée pour recevoir, en utilisant la couche RAC, les premières informations envoyées par l'UE en utilisant le support radio ;
dans lequel les premières informations sont envoyées d'une couche inférieure de l'UE à une couche inférieure du premier dispositif réseau, et une couche de protocole de commande de transmission/ protocole internet, TCP/IP, ou une couche de protocole de datagramme utilisateur/ protocole internet, UDP/IP, du premier dispositif réseau est configurée pour : après que les premières informations ont atteint la couche inférieure du premier dispositif réseau, transférer les premières informations à la couche RAC du premier dispositif réseau ;
dans lequel la couche inférieure de l'UE et la couche inférieure du premier dispositif réseau comprennent une couche de protocole de convergence de données par paquet, PDCP, une couche de commande de liaison radio, RLC, une couche de commande d'accès au support, MAC, et une couche physique, PHY ; et
les premières informations sont des informations concernant une couche d'application de l'UE et les premières informations comprennent au moins l'une des informations suivantes : des informations de service de l'UE, des informations de capteur de l'UE, des informations de comportement d'utilisateur et des informations de statut de l'UE ; dans lequel l'unité de traitement (2101) est en outre configurée pour :
recevoir un message de demande d'établissement envoyé par un deuxième dispositif réseau, dans lequel le message de demande d'établissement comprend un premier message de configuration, et le premier message de configuration comprend au moins un élément parmi une adresse IP de l'UE, un numéro de port d'un service de couche supérieure de l'UE, une adresse IP du premier dispositif réseau et un numéro de port du premier dispositif réseau ;
envoyer un premier message d'établissement de support à l'UE, dans lequel le premier message d'établissement de support comprend le premier message de configuration et un deuxième message de configuration, et le deuxième message de configuration comprend une identité de support radio, ID, attribuée à l'UE par le premier dispositif réseau ; et
recevoir un premier message de fin d'établissement de support envoyé par l'UE.

8. Premier dispositif réseau selon la revendication 7, dans lequel les informations de service de l'UE comprennent au moins l'une des informations suivantes : des informations d'identité de service, des informations de classe d'indication de demande, des informations d'antémémoire de service, des informations de données à recevoir, des informations de statut de service, des informations d'acheminement local, des informations de mandataire TCP et des informations d'acheminement de données ;
les informations de capteur de l'UE comprennent au moins l'une des informations suivantes : une vitesse de déplacement de l'UE, une piste de déplacement de l'UE et des informations de direction de déplacement de l'UE ;
les informations de comportement d'utilisateur comprennent au moins l'une des informations suivantes : une désactivation de service, une suspension de service, un verrouillage d'écran et un arrêt par l'utilisateur ; ou
les informations de statut de l'UE comprennent au moins l'une des informations suivantes : un niveau de batterie de l'UE, une résolution d'écran de l'UE ou une taille d'écran de l'UE.

9. Premier dispositif réseau selon la revendication 7 ou 8, dans lequel le premier dispositif réseau comprend en outre une unité d'envoi (2103) ; et
l'unité d'envoi (2103) est configurée, avant que l'unité de réception (2102) ne reçoive, en utilisant la couche RAC, les premières informations envoyées par l'UE en utilisant le support radio, pour envoyer un message de radiomessagerie à l'UE, dans lequel le message de radiomessagerie comprend des deuxièmes informations d'indication, et les deuxièmes informations d'indication sont utilisées pour établir le support radio pour échanger les premières informations entre l'UE et le premier dispositif réseau.

10. Premier dispositif réseau selon l'une quelconque des revendications 7 à 9, dans lequel le premier dispositif réseau comprend en outre une unité d'envoi (2103), configurée pour envoyer des deuxièmes informations à l'UE en utilisant le support radio, dans lequel les deuxièmes informations comprennent au moins l'une des informations suivantes : des informations de charge de cellule, des informations d'indication de pourtour de cellule, des informations d'indication de transfert et des informations d'indication de transfert de débit binaire.
